# FASCICULE DE BREVET EUROPEEN

(11) **EP 3 877 393 B1**
(45) Date de publication et mention de la délivrance du brevet: **19.06.2024**
(21) Numéro de dépôt: 19818218.0
(22) Date de dépôt: 06.11.2019
(51) Int. Cl.: C07F 7/18, C08G 18/48, C08G 18/75, C08G 18/83, C08G 18/10, C08G 18/22, C08G 18/24, C09D 175/04, C08G 18/28, C08G 18/42, C08G 18/44, C09J 175/04

(54) **HYDROXYSILANES FONCTIONNALISES, POLYURETHANES SILYLES, ET COMPOSITIONS LES COMPRENANT**
FUNKTIONALISIERTE HYDROXYSILANE, SILYLIERTE POLYURETHANE UND ZUSAMMENSETZUNGEN DAMIT
FUNCTIONALIZED HYDROXYSILANES, SILYLATED POLYURETHANES, AND COMPOSITIONS COMPRISING SAME

(30) Priorité: 09.11.2018 FR 1860358
(43) Date de publication de la demande: 15.09.2021
(73) Titulaire: Bostik SA, 92700 Colombes (FR)
(72) Inventeur: COLIN, Boris, 60280 Venette (FR); MICHAUD, Guillaume, 60280 Venette (FR); FOUQUAY, Stéphane, 60280 Venette (FR); SIMON, Frédéric, 60280 Venette (FR)
(74) Mandataire: Arkema Patent
(86) Numéro de dépôt international: PCT/FR2019/052621
(87) Numéro de publication internationale: WO 2020/094973

(56) Documents cités:
- JP-A- 2004 292 517
- US-A1- 2018 291 265

## Description

### DOMAINE DE L'INVENTION

La présente invention concerne un hydroxysilane fonctionnalisé, ainsi que son procédé de préparation.

La présente invention concerne également les polyuréthanes silylés obtenus à partir desdits hydroxysilanes fonctionnalisés, ainsi que les compositions les comprenant.

### ARRIERE-PLAN TECHNOLOGIQUE

Les polymères silylés sont typiquement utilisés à titre d'adhésifs, de mastics, de revêtements, par exemple dans l'industrie aéronautique, automobile ou la construction. De tels polymères comprennent généralement des groupes terminaux de type alkoxysilane reliés, directement ou indirectement, à une chaîne principale de type polyéther ou polyuréthane.

Les polyuréthanes silylés peuvent être obtenus à partir de dérivés hydroxysilanes comprenant une fonction alcoxysilane. Toutefois, les hydroxysilanes présentent typiquement des problèmes de stabilité en raison notamment de la possible transalcoxylation entre la fonction hydroxyle et la fonction alcoxysilane de l'hydroxysilane. Cette réaction secondaire peut conduire à des produits oligomériques secondaires par réaction intra et/ou intermoléculaire, lesquels peuvent affecter les propriétés de réticulation des polymères silylés conduisant à des propriétés mécaniques moindres.

En outre, les polyuréthanes silylés ont typiquement une viscosité élevée ce qui rend leur manipulation et leur utilisation plus difficiles.

JP2004292517 divulgue une composition réticulable comprenant au moins un composé silylé obtenu par réaction d'un alcoxysilane contenant un groupe isocyanate a) et d'un polyoxyalkylène polyol b).

Il existe donc un besoin pour de nouveaux dérivés hydroxysilanes permettant avantageusement de résoudre au moins l'un des inconvénients susmentionnés.

Il existe également un besoin pour de nouveaux polyuréthanes silylés ne présentant pas au moins l'un des inconvénients susmentionnés.

### DESCRIPTION DE L'INVENTION

Dans la présente demande, en l'absence d'indication contraire :
- les quantités exprimées sous la forme de pourcentage correspondent à des pourcentages poids/poids ;
- l'indice hydroxyle d'un composé alcoolique représente le nombre de fonctions hydroxyles par gramme de produit, lequel est exprimé sous la forme du nombre équivalent de milligrammes de potasse (KOH) utilisés dans le dosage des fonctions hydroxyles, par gramme de produit ;
- la mesure de viscosité à 23°C (ou à 100°C) peut se faire à l'aide d'un viscosimètre Brookfield selon la norme ISO 2555. Typiquement, la mesure réalisée à 23°C (ou à 100°C) peut se faire à l'aide d'un viscosimètre Brookfield RVT, d'une aiguille adaptée au domaine de viscosité et à une vitesse de rotation de 20 tours par minute (tr/mn) où 1 tr/mn = 1/60 Hz)
- les masses moléculaires moyennes en nombre (Mn) des polyols exprimées en g/mole sont calculées à partir de leurs indices d'hydroxyles et de leurs fonctionnalités.

### A. Composés

La présente invention concerne un composé de formule (I) : 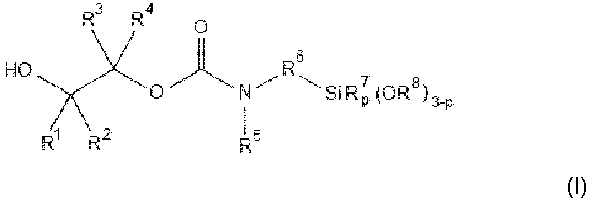 dans laquelle :
- R¹, R², R³ et R⁴ sont chacun, indépendamment les uns des autres, choisis dans le groupe constitué de : H ; un groupe alkyle linéaire ou ramifié comprenant de 1 à 20 atomes de carbone ; et un groupe -C(O)-X-R⁹ dans lequel :
   ∘ X représente un atome d'oxygène ou un radical NR¹⁰,
   ∘ R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
   ∘ R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone, ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 3 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone ; ou deux radicaux R⁸ peuvent former ensemble un cycle comprenant de 3 à 12 atomes de carbone ; et
- p représente 0, 1, ou 2 ;
à condition qu'un radical parmi les radicaux R¹, R², R³ ou R⁴ représente un groupe -C(O)-X-R⁹.

De préférence, les composés de formule (I) ci-dessus sont ceux pour lesquels :
- R¹ = R² = R³ = H et R⁴ représente un groupe -C(O)-X-R⁹ dans lequel X et R⁹ sont tels que définis précédemment ; ou
- R¹ = R⁴ = R³ = H et R² représente un groupe -C(O)-X-R⁹ dans lequel X et R⁹ sont tels que définis précédemment.

Les composés de formule (I) peuvent être choisis parmi les composés de formules (I-1) et (I-2) suivantes : 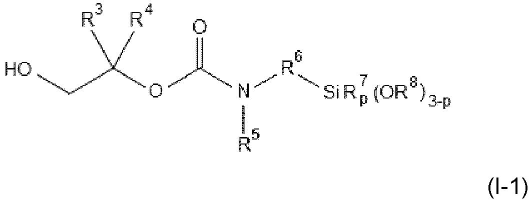 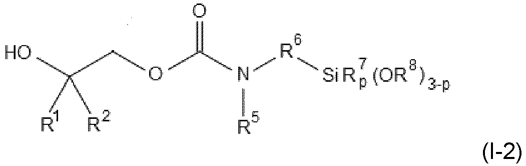 dans lesquelles :
- R³, R⁴, R⁵, R⁶, R⁷, R⁸, et p sont tels que définis ci-dessus,
- un radical de R³ ou R⁴ représente un groupe -C(O)-X-R⁹,
- un radical de R¹ ou R² représente un groupe -C(O)-X-R⁹,
- X représente un atome d'oxygène ou un radical NR¹⁰,
- R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone.

Les composés de formule (I-1) sont notamment des composés de formule (I) susmentionnée dans laquelle R¹ = R² = H.

Les composés de formule (I-2) sont notamment des composés de formule (I) susmentionnée dans laquelle R³ = R⁴ = H.

Parmi les composés de formule (I-1), on peut par exemple citer :
- les composés de formule (I-1-A) dans laquelle R³, R⁴, R⁵, R⁶, R⁷, R⁸, et p sont tels que définis ci-dessus, et un radical de R³ ou R⁴ représente un groupe -C(O)-O-R⁹, R⁹ étant tel que défini ci-dessus;
   ou
- les composés de formule (I-1-B) dans laquelle R³, R⁴, R⁵, R⁶, R⁷, R⁸, et p sont tels que définis précédemment, et un radical de R³ ou R⁴ représente un groupe -C(O)-N(R¹⁰)R⁹, R⁹ et R¹⁰ étant tels que définis précédemment.

Parmi les composés de formule (I-2), on peut par exemple citer :
- les composés de formule (I-2-A) dans laquelle R¹, R², R⁵, R⁶, R⁷, R⁸ et p sont tels que définis ci-dessus, et un radical de R¹ ou R² représente un groupe -C(O)-O-R⁹, R⁹ étant tel que défini ci-dessus;
   ou
- les composés de formule (I-2-B) dans laquelle R¹, R², R⁵, R⁶, R⁷, R⁸, et p sont tels que définis précédemment, et un radical de R¹ ou R² représente un groupe -C(O)-N(R¹⁰)R⁹, R⁹ et R¹⁰ étant tels que définis précédemment.

Selon un mode de réalisation, les composés de formule (I) sont des composés de formule (I-3) suivante : 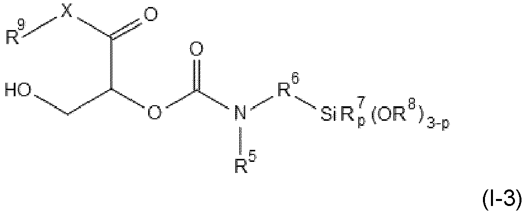 dans laquelle :
- X représente un atome d'oxygène ou un radical NR¹⁰,
- R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 5 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone ; ou deux radicaux R⁸ peuvent former ensemble un cycle comprenant de 3 à 12 atomes de carbone ; et
- p représente 0, 1, ou 2.

Selon un autre mode de réalisation, les composés de formule (I) sont des composés de formule (I-4) suivante : 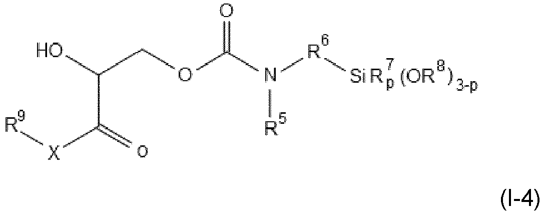 dans laquelle :
- X représente un atome d'oxygène ou un radical NR¹⁰,
- R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone, ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 5 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone; ou deux radicaux R⁸ peuvent former ensemble un cycle comprenant de 3 à 12 atomes de carbone ; et
- p représente 0, 1, ou 2.

Selon un mode de réalisation, les composés de formules (I), (I-1), (I-2), (I-3) ou (I-4) susmentionnées, sont ceux pour lesquels :
- p = 0 ; et/ou
- R⁸ = méthyle ; et/ou
- R⁶ = propylène ; et/ou
- R⁵ = H ou butyle.

En particulier, les composés de formules (I), (I-1), (I-2), (I-3) ou (I-4) susmentionnées, sont ceux pour lesquels :
- p = 0 ; et
- R⁸ = méthyle ; et
- R⁶ = propylène ; et
- R⁵ = H ou butyle.

Selon un mode de réalisation, dans les composés de formules (I), (I-1), (I-2), (I-3) ou (I-4) susmentionnées, le groupe R⁹ représente un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations.

De préférence, dans les composés de formules (I), (I-1), (I-2), (I-3) ou (I-4) susmentionnées, le groupe R⁹ représente :
- un groupe alkyle linéaire comprenant de 1 à 12 atomes de carbone, de préférence de 1 à 5 atomes de carbone, préférentiellement un groupe butyle ; ou
- un groupe alkyle ramifié comprenant de 1 à 12 atomes de carbone, de préférence de 5 à 12 atomes de carbone, de préférence un groupe -CH₂-CH(CH₂CH₃)-(CH₂)₃-CH₃ ; ou
- un groupe de formule -(CH(Me)-CH₂-O)ₙ-(CH₂)ₘ-CH₃, dans laquelle m et n représente chacun un nombre entier allant de 1 à 5, de préférence 1, 2 ou 3.

Selon un mode de réalisation, dans les composés de formules (I), (I-1), (I-2), (I-3) ou (I-4) susmentionnées, le groupe R¹⁰ représente un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations.

De préférence, le groupe R¹⁰ représente un radical alkyle linéaire comprenant de 1 à 12 atomes de carbone, préférentiellement de 1 à 5 atomes de carbone, le groupe R¹⁰ étant avantageusement un méthyle.

Selon un mode de réalisation préféré, les composés de formule (I) sont choisis parmi les composés suivants :

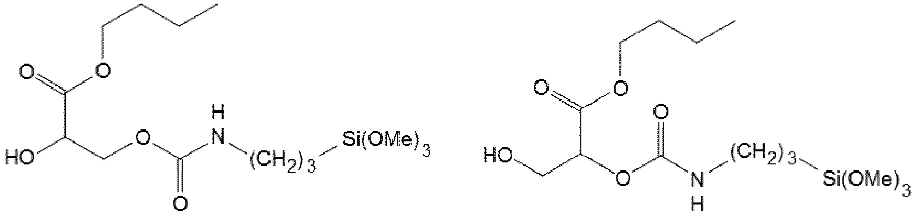

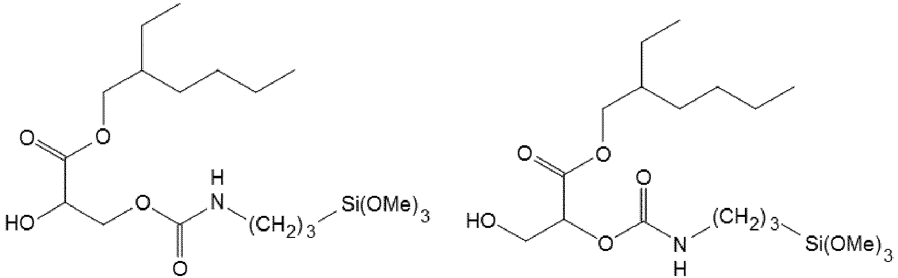

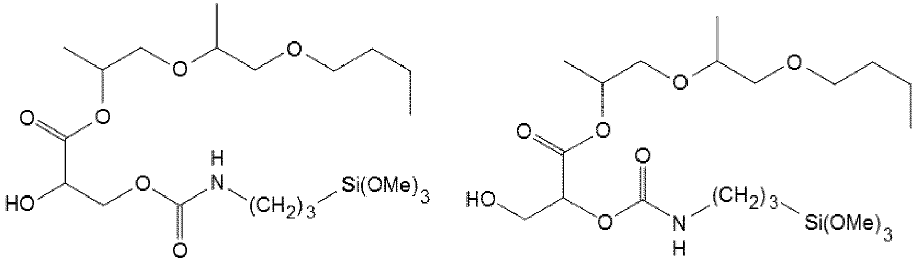

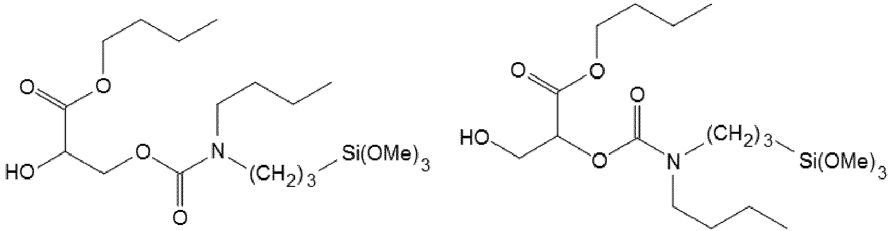

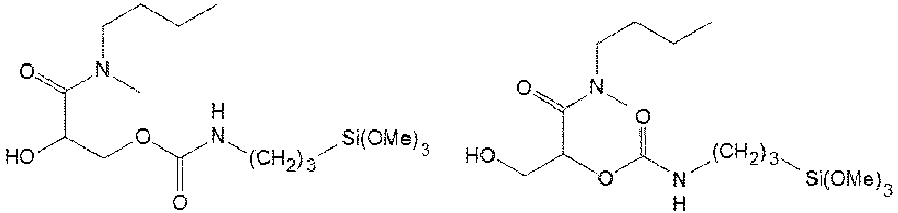

### B. Procédé de préparation des composés

La présente invention concerne également un procédé de préparation d'un composé de formule (I) susmentionnée comprenant la réaction entre un composé de formule (II) : 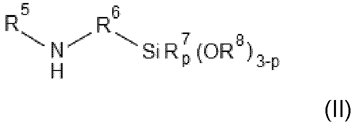 dans laquelle R⁵, R⁶, R⁷, R⁸ et p sont tels que définis précédemment ; avec un composé de formule (III) suivante : 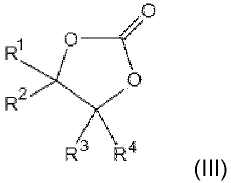 dans laquelle R¹, R², R³ et R⁴ sont tels que définis précédemment, un radical parmi les radicaux R¹, R², R³ ou R⁴ représentant un groupe -C(O)-X-R⁹ avec X et R⁹ étant tels que définis précédemment.

Les composés de formule (III) peuvent être préparés de manière conventionnelle à partir d'époxydes correspondants, tel que par exemple divulgué dans WO 2011/157551, WO 2012/065879 et WO 2013/092011.

Parmi les composés de formule (II), on peut par exemple citer les composés suivants :
- le 4-aminobutyltriéthoxysilane ;
- le 3-aminopropyltris(méthoxyéthoxyéthoxy)silane ;
- le N-(n-butyl)-3-aminopropyltrimethoxysilane ;
- le 3-aminopropyldiméthyléthoxysilane ;
- le 3-aminopropylméthyldiéthoxysilane ;
- le 3-aminopropyldiisopropyléthoxysilane ;
- le 3-aminopropyltriéthoxysilane ;
- le 3-aminopropyltriméthoxysilane ;
- le 3-N-methylaminopropyltriéthoxysilane ;
- le N-[3-(triméthoxysilyl)propyl] aspartate d'éthyle
- le N-[3-(triméthoxysilyl)propyl]-2-aminométhylsuccinate d'éthyle
- le N-[3-(triméthoxysilyl)propyl]-2-aminométhylmalonate d'éthyle
- le bis[3-(triméthoxysilyl)propyl]amine.

De préférence, les composés de formule (II) sont le N-(n-butyl)-3-aminopropyltrimethoxysilane et le 3-aminopropyltriméthoxysilane.

Les composés de formule (III) peuvent être choisis parmi les composés de formule (III-1) suivante : 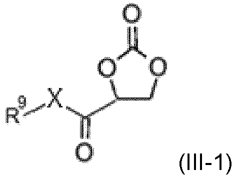 dans laquelle X et R⁹ sont tels que définis précédemment.

Parmi les composés de formule (III), on peut par exemple citer les composés suivants :

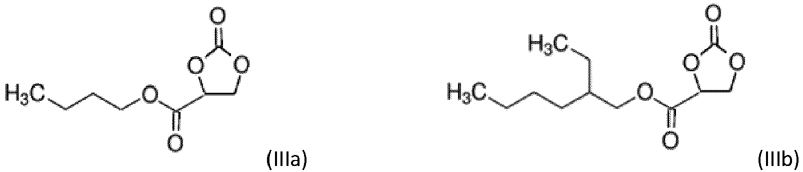

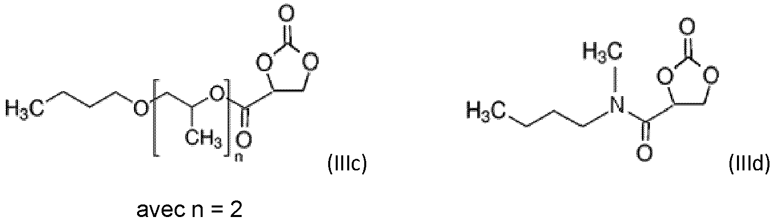

La réaction peut être réalisée dans des conditions anhydres.

La réaction peut être réalisée à une température allant de 15°C à 100°C, de préférence de 20°C à 95°C, préférentiellement à température ambiante (23°C) ou à 90°C.

La réaction peut être réalisée en présence de solvant, tel que par exemple toluène, acétate d'éthyle, tétrahydrofurane, acétone, butanone, ou leurs mélanges.

De préférence, la réaction est réalisée dans un ratio molaire composé (II)/composé (III) allant de 1,2 à 0,8, de préférence 1,1 à 0,9, préférentiellement le ratio vaut 1.

Le temps de la réaction peut varier notamment selon la nature des réactifs utilisés, leurs concentrations, la température de la réaction. La réaction peut être surveillée par spectroscopie infrarouge, en surveillant la disparition de la bande IR du carbonyle du carbonate ou par RMN ¹H et/ou ¹³C.

A la fin de la réaction, le composé de formule (I) peut être récupéré, notamment par évaporation du solvant de la réaction, et éventuellement soumis à une étape de purification.

### C. Composition C

La présente invention concerne également une composition C comprenant deux composés de formule (I) différents, la formule (I) étant telle que définie précédemment.

Selon un mode de réalisation, la composition C susmentionnée comprend :
- un composé de formule (I-1) : 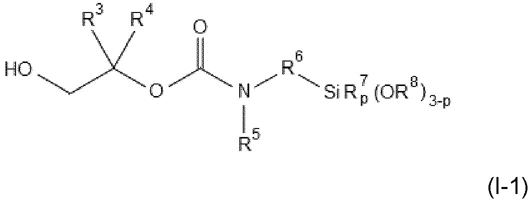 et
- un composé de formule (I-2) : 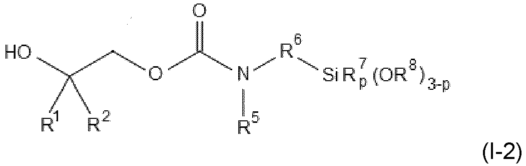 dans lesquelles :
   - R¹, R², R³ et R⁴ sont chacun, indépendamment les uns des autres, choisi dans le groupe constitué de : H ; un groupe alkyle linéaire ou ramifié comprenant de 1 à 20 atomes de carbone ; et un groupe -C(O)-X-R⁹ dans lequel :
      ∘ X représente un atome d'oxygène ou un radical NR¹⁰,
      ∘ R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
      ∘ R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone, ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 5 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone ; ou deux radicaux R⁸ peuvent former ensemble un cycle comprenant de 3 à 12 atomes de carbone ; et
- p représente 0, 1, ou 2 ;
- un radical de R³ ou R⁴ représente un groupe -C(O)-X-R⁹ ; et
- un radical de R¹ ou R² représente un groupe -C(O)-X-R⁹.

De préférence, dans la composition C susmentionnée :
- le radical R⁵ de la formule (I-1) est identique au radical R⁵ de la formule (I-2) ;
- le radical R⁶ de la formule (I-1) est identique au radical R⁶ de la formule (I-2) ;
- le radical R⁷ de la formule (I-1) est identique au radical R⁷ de la formule (I-2) ;
- le radical R⁸ de la formule (I-1) est identique au radical R⁸ de la formule (I-2) ;
- p de la formule (I-1) est identique au radical R⁸ de la formule (I-2) ; et
- le radical R¹ (ou R²) de la formule (I-2) est identique au radical R³ (respectivement ou R⁴) de la formule (I-1).

Dans la composition C susmentionnée, le ratio molaire composé de formule (I-1)/composé de formule (I-2) peut aller de 1/100 à 100/1, de préférence de 10/90 à 90/10, préférentiellement de 20/80 à 80/20, par exemple de 30/70 à 70/30.

Selon un autre mode de réalisation, la composition C selon l'invention comprend :
- un composé de formule (I-3) : 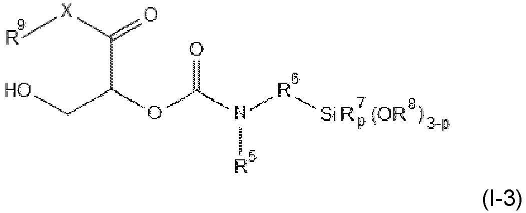 et
- un composé de formule (I-4) : 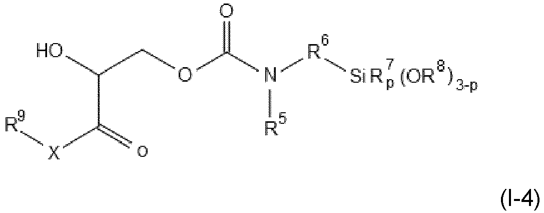 dans lesquelles :
   ∘ X représente un atome d'oxygène ou un radical NR¹⁰,
   ∘ R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
   ∘ R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone, ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 5 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone ; ou deux radicaux R⁸ peuvent former ensemble un cycle comprenant de 3 à 12 atomes de carbone ; et
- p représente 0, 1, ou 2.

De préférence, dans la composition C susmentionnée :
- le radical R⁵ de la formule (I-3) est identique au radical R⁵ de la formule (I-4) ;
- le radical R⁶ de la formule (I-3) est identique au radical R⁶ de la formule (I-4) ;
- le radical R⁷ de la formule (I-3) est identique au radical R⁷ de la formule (I-4) ;
- le radical R⁸ de la formule (I-3) est identique au radical R⁸ de la formule (I-4) ;
- le radical X de la formule (I-3) est identique au radical X de la formule (I-4) ;
- le radical R⁹ de la formule (I-3) est identique au radical R⁹ de la formule (I-4) ; et
- p de la formule (I-3) est identique au radical R⁸ de la formule (I-4).

Dans la composition C susmentionnée, le ratio molaire composé de formule (I-3)/composé de formule (I-4) peut aller de 1/100 à 100/1, de préférence de 10/90 à 90/10, préférentiellement de 20/80 à 80/20, par exemple de 30/70 à 70/30.

De préférence, la composition C est choisie parmi les compositions suivantes :
- composition C1 comprenant : 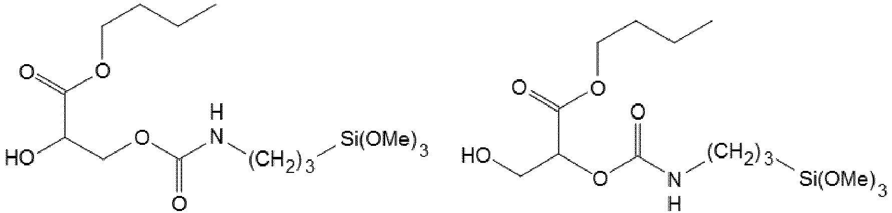
- la composition C2 comprenant : 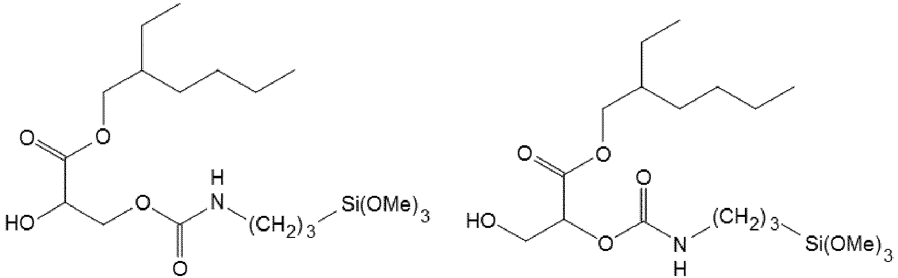
- la composition C3 comprenant : 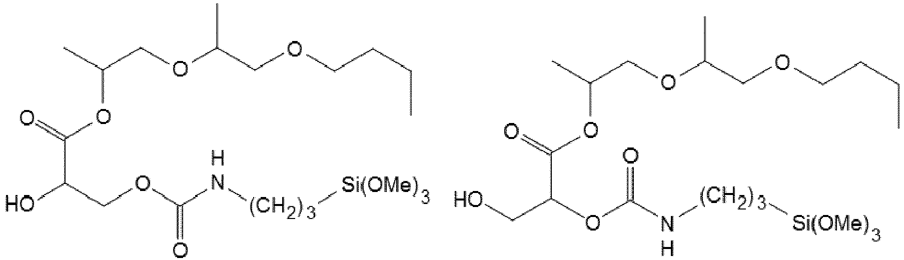
- la composition C4 comprenant : 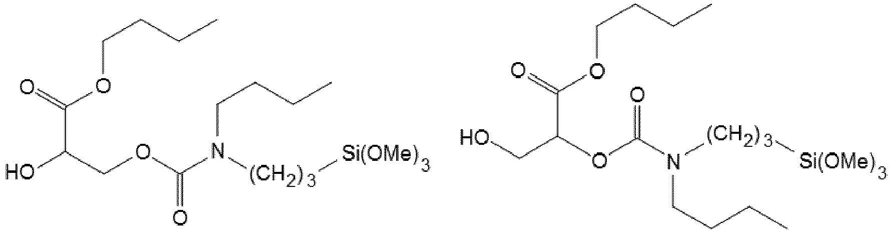
- la composition C5 comprenant :

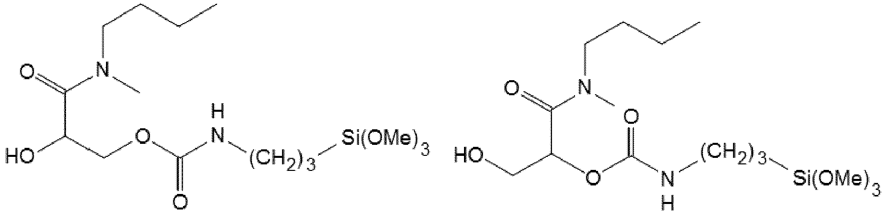

La présente invention concerne également l'utilisation d'un composé de formule (I) telle que définie précédemment ou de la composition C susmentionnée pour préparer un polymère.

### D. Polymère

La présente invention concerne également un polyuréthane P obtenu par un procédé comprenant une étape de réaction entre :
- au moins un, de préférence d'au moins deux, composé(s) de formule (I) telle que définie ci-dessus, et
- un prépolymère, de préférence prépolymère polyuréthane, de formule (IV) suivante : 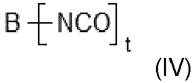 avec t représentant un nombre entier ou non entier pouvant aller de 2 à 4, et B représentant un radical organique multivalent.

De préférence, le polyuréthane P selon l'invention est obtenu par un procédé comprenant une étape de réaction entre :
- un composé de formule (I-3) susmentionnée,
- un composé de formule (I-4) susmentionnée, et
- un prépolymère de formule (IV) susmentionnée ;
   de préférence, les composés de formule (I-3) et (I-4) étant tels que :
- le radical R⁵ de la formule (I-3) est identique au radical R⁵ de la formule (I-4) ;
- le radical R⁶ de la formule (I-3) est identique au radical R⁶ de la formule (I-4) ;
- le radical R⁷ de la formule (I-3) est identique au radical R⁷ de la formule (I-4) ;
- le radical R⁸ de la formule (I-3) est identique au radical R⁸ de la formule (I-4) ;
- le radical X de la formule (I-3) est identique au radical X de la formule (I-4) ;
- le radical R⁹ de la formule (I-3) est identique au radical R⁹ de la formule (I-4) ; et
- p de la formule (I-3) est identique au radical R⁸ de la formule (I-4).

Le prépolymère de formule (IV) peut être obtenu par toute méthode connue de l'homme du métier pour la préparation de prépolymère terminé avec des groupes -NCO.

Selon un mode de réalisation, le prépolymère de formule (IV) susmentionnée est un polyuréthane obtenu par réaction de polyaddition :
a) d'au moins un polyisocyanate de préférence choisi parmi les diisocyanates, les triisocyanates, et leurs mélanges ;
b) avec au moins un polyol de préférence choisi parmi les polyéther polyols, les polycarbonate polyols, les polyester polyols, et leurs mélanges ;
dans des quantités telles que le rapport molaire NCO/OH (r1) est strictement supérieur à 1, de préférence va de 1,2 à 2.

Selon un mode de réalisation, le polyuréthane P selon l'invention est préparé par un procédé comprenant les étapes suivantes:
- E1) la préparation d'un prépolymère polyuréthane à terminaisons -NCO de formule (IV) susmentionnée par une réaction de polyaddition :
   i) d'au moins un polyisocyanate de préférence choisi parmi les diisocyanates, les triisocyanates, et leurs mélanges ;
   ii) avec au moins un polyol de préférence choisi parmi les polyéther polyols, les polycarbonate polyols, les polyester polyols, et leurs mélanges ;
   dans des quantités telles que le rapport molaire NCO/OH (r1) est strictement supérieur à 1 ;
   et
- E2) la réaction du produit formé à l'issue de l'étape E1) avec au moins un, de préférence deux, composé de formule (I) telle que définie précédemment, en particulier dans des quantités telles que le rapport molaire NCO/OH (r2) est de préférence compris entre 1,3 et 5,

Dans le cadre de l'invention, et sauf mention contraire, (r1) est le rapport molaire NCO/OH correspondant au rapport molaire du nombre de groupes isocyanates (NCO) sur le nombre de groupes hydroxyles (OH) portés par l'ensemble des polyisocyanate(s) et polyol(s) présents dans le milieu réactionnel de l'étape E1).

Dans le cadre de l'invention, et sauf mention contraire, (r2) est le rapport molaire NCO/OH correspondant au rapport molaire du nombre de groupes isocyanates sur le nombre de groupes hydroxyles portés respectivement par l'ensemble des isocyanate(s) (s'agissant notamment du prépolymère polyuréthane à terminaisons NCO et éventuellement le(s) polyisocyanate(s) non réagi(s) à l'issue de l'étape E1)), et composé(s) de formule (I) présents dans le milieu réactionnel de l'étape E2).

Lorsque le polyuréthane à terminaisons NCO est obtenu lors de l'étape E1) à partir d'un mélange de polyisocyanates ou de plusieurs polyisocyanates ajoutés successivement, le calcul du rapport (r1) tient compte d'une part des groupes NCO portés par l'ensemble des polyisocyanates présents dans le milieu réactionnel de l'étape E1), et d'autre part des groupes OH portés par le(s) polyol(s) présent(s) dans le milieu réactionnel de l'étape E1).

Lors de l'étape E1), la réaction de polyaddition est mise en oeuvre à une température de préférence inférieure à 95°C, et dans des conditions de préférence anhydres.

### Etape E1)

Le(s) polyol(s) utilisable(s) pour préparer le prépolymère de formule (IV) susmentionné utilisé selon l'invention peu(ven)t être choisi(s) parmi ceux dont la masse moléculaire moyenne en nombre (Mn) va de 300 à 20 000 g/mol, de préférence de 400 à 15 000 g/mol, et préférentiellement de 500 à 12 000 g/mol.

De préférence, leur fonctionnalité hydroxyle va de 2 à 3. La fonctionnalité hydroxyle est le nombre moyen de fonction hydroxyle par mole de polyol.

Le(s) polyol(s) utilisable(s) selon l'invention peut(vent) présenter un indice hydroxyle (IOH) (moyen) allant de 9 à 570 milligrammes de KOH par gramme de polyol (mg KOH/g), de préférence de 35 à 430 mg KOH/g, de préférence encore de 55 à 340 mg KOH/g.

Le ou les polyols peuvent être choisis parmi les polyéther polyols, les polyester polyols, les polycarbonate polyols et leurs mélanges. De préférence, l'étape E1) est réalisée avec un polyéther polyol.

Le(s) polyéther polyol(s) utilisable(s) selon l'invention est (sont) de préférence choisi(s) parmi les polyoxyalkylène-polyol, dont la partie alkylène, linéaire ou ramifiée, comprend de 2 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène-diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse moléculaire moyenne en nombre (Mn) allant de 300 à 20 000 g/mol ;
- les polyoxyéthylène diols ou triols (aussi désignés par polyéthylène glycol (PEG) diols ou triols) ayant une masse moléculaire moyenne en nombre (Mn) allant de 300 à 15 000 g/mol;
- les polyoxybutylène diols ou triols (aussi désignés par (PBG) diols ou triols ayant une masse moléculaire en nombre allant de 300 à 20 000 g/mol ;
- les polytétraméthylène diols ou triols (aussi désignés par PolyTHF ou PTMEG) ayant une masse moléculaire moyenne en nombre (Mn) allant de 250 à 4000 g/mol ;
- les copolymères ou terpolymères diols ou triols à base d'oxyde d'éthylène, d'oxyde de propylène et/ou d'oxyde butylène ayant une masse moléculaire moyenne en nombre (Mn) allant de 300 à 20 000 g/mol ;
- et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

Parmi les polypropylène glycols ayant une fonctionnalité hydroxyle égale à 2, on peut citer :
- le VORANOL ^{®} EP 1900 : PPG difonctionnel de masse moléculaire moyenne en nombre d'environ 4 008 g/mol, et d'indice hydroxyle I_{OH} égal à 28 mg KOH/g ;
- l'ACCLAIM ^{®} 8200 : PPG difonctionnel de masse moléculaire moyenne en nombre de 8 016 g/mol, et d'indice hydroxyle I_{OH} égal à 14 mg KOH/g ;
- l'ACCLAIM ^{®} 12200 : PPG difonctionnel de masse moléculaire moyenne en nombre de 11 222 g/mol, et d'indice hydroxyle I_{OH} égal à 10 mg KOH/g ;
- l'ACCLAIM ^{®} 18200 : PPG difonctionnel de masse moléculaire moyenne en nombre de 17 265 g/mol, et d'indice hydroxyle I_{OH} égal à 6,5 mg KOH/g.

Parmi les polypropylène glycols ayant une fonctionnalité hydroxyle égale à 3, on peut citer :
- le VORANOL ^{®} CP 755 : PPG trifonctionnel de masse moléculaire moyenne en nombre d'environ 710 g/mol, et d'indice hydroxyle I_{OH} égal à 237 mg KOH/g ;
- le VORANOL ^{®} CP 3355 : PPG trifonctionnel de masse moléculaire moyenne en nombre d'environ 3544 g/mol, et d'indice hydroxyle I_{OH} égal à 47,5 mg KOH/g ;
- l'ACCLAIM ^{®} 6300 : PPG trifonctionnel de masse moléculaire moyenne en nombre d'environ 5 948 g/mol, et d'indice hydroxyle I_{OH} égal à 28,3 mg KOH/g.

Parmi les polytétraméthylène glycols ayant une fonctionnalité hydroxyle égale à 2, on peut citer :
- le TERATHANE ^{®} PTMEG 250 : PolyTHF difonctionnel de masse moléculaire moyenne en nombre d'environ 4 008 g/mol, et d'indice hydroxyle I_{OH} allant de 230 à 270 mg KOH/g ;
- le TERATHANE ^{®} PTMEG 2900 : PolyTHF difonctionnel de masse moléculaire moyenne en nombre d'environ 4 008 g/mol, et d'indice hydroxyle I_{OH} allant de 37,7 à 39,7 mg KOH/g.

Dans le cadre de l'invention, on entend par « fonctionnalité hydroxyle d'un polyéther polyol», le nombre moyen de fonction hydroxyle par mole de polyéther polyol.

Les polyester polyols peuvent être choisis parmi les polyester diols et les polyester triols, et de préférence parmi les polyester diols.

A titre d'exemple de polyester diol ou triol, on peut citer :
- le « REALKYD^{®} XTR 10410 » commercialisé par la société CRAY VALLEY de masse moléculaire moyenne en nombre (Mn) voisine de 1000 g/mol et dont l'indice hydroxyle va de 108 à 116 mg KOH/g. Il s'agit d'un produit issu de la condensation d'acide adipique, de diéthylèneglycol et de monoéthylèneglycol ;
- les polycaprolactones diols ou triols commercialisés par la société PERSTORP sous la référence CAPA Polyols de masse moléculaire moyenne en nombre (Mn) allant de 240 à 8 000 g/mol.

Les polycarbonate polyols peuvent être choisis parmi les polycarbonate diols ou triols, ayant en particulier une masse moléculaire moyenne en nombre (Mₙ) allant de 300 g/mol à 12 000 g/mol.

A titre d'exemple de polycarbonate diol, on peut citer :
- le CONVERGE POLYOL 212-10 et CONVERGE POLYOL 212-20 commercialisés par la société NOVOMER respectivement de masse moléculaire en nombre (Mₙ) égales à 1 000 et 2 000 g/mol dont les indices hydroxyles sont respectivement de 112 et 56 mg KOH/g,
- le DESMOPHEN^{®} C XP 2716 commercialisé par COVESTRO de masse moléculaire en nombre (Mₙ) égale à 326 g/mol et dont l'indice hydroxyle est de 344 mg KOH/g,
- les POLYOL C-590, C1090, C-2090 et C-3090 commercialisés par KURARAY ayant une masse moléculaire en nombre (Mₙ) allant de 500 à 3 000 g/mol et un indice hydroxyle allant de 224 à 37 mg KOH/g.

Le(s) polyisocyanate(s) utilisable(s) pour préparer le prépolymère de formule (IV) susmentionnée peuvent être ajoutés séquentiellement ou mis à réagir sous la forme de mélange.

Selon un mode de réalisation, le(s) polyisocyanate(s) utilisable(s) sont des diisocyanate(s), de préférence choisi dans le groupe constitué de l'isophorone diisocyanate (IPDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI)), du tétraméthylxylylène diisocyanate (TMXDI) (en particulier le tétraméthyl (méta)xylylène diisocyanate), et de leurs mélanges.

De préférence, le(s) polyisocyanate(s) est(sont) choisi(s) parmi le toluène diisocyanate (en particulier l'isomère 2,4 TDI, l'isomère 2,6-TDI ou leurs mélanges), le méta-xylylène, l'IPDI, et leurs mélanges. De préférence, le polyisocyanate est l'isophorone diisocyanate (IPDI).

Le(s) polyisocyanate(s) utilisable(s) sont typiquement largement disponibles dans le commerce. A titre d'exemple, on peut citer le SCURANATE^{®} TX commercialisé par la société VENCOREX, correspondant à un 2,4-TDI de pureté de l'ordre de 95%, le SCURANATE^{®} T100 commercialisé par la société VENCOREX, correspondant à un 2,4-TDI de pureté supérieure à 99% en poids, le DESMODUR^{®} I » commercialisé par la société COVESTRO, correspondant à un IPDI ou encore le DESMODUR^{®} N3300 » commercialisé par la société COVESTRO, correspondant à un isocyanurate de HDI, le « TAKENATE ^{™} 500 » commercialisé par MITSUI CHEMICALS correspondant à un m-XDI, le « TAKENATE ^{™} 600 » commercialisé par MITSUI CHEMICALS correspondant à un m-H6XDI, le « VESTANAT^{®} H12MDI » commercialisé par EVONIK correspondant à un H12MDI.

De préférence, le polyisocyanate est l'isophorone diisocyanate (IPDI).

La réaction de polyaddition de l'étape E1) peut être mise en oeuvre en présence ou non d'au moins un catalyseur de réaction.

Le(s) catalyseur(s) de réaction utilisable(s) au cours de la réaction de polyaddition de l'étape E1) peu(ven)t être tout catalyseur connu de l'homme du métier pour catalyser la formation de polyuréthane par réaction d'au moins un polyisocyanate avec au moins un polyol.

Une quantité allant jusque 0,3% en poids de catalyseur(s) par rapport au poids du milieu réactionnel de l'étape E1) peut être utilisée. En particulier, on préfère utiliser de 0,02 à 0,2% en poids de catalyseur(s) par rapport au poids total du milieu réactionnel de l'étape E1).

### Etape E2)

L'étape E2) peut être réalisée dans des conditions anhydres.

L'étape E2) peut être réalisée à une température allant de 40°C à 100°C, de préférence de 60°C à 100°C, et avantageusement de 80°C à 95°C.

La réaction de polyaddition de l'étape E2) peut être mise en oeuvre en présence ou non d'au moins un catalyseur de réaction.

Le(s) catalyseur(s) de réaction utilisable(s) au cours de la réaction de polyaddition de l'étape E2) peu(ven)t être tout catalyseur connu de l'homme du métier pour catalyser ce type de réaction entre un composé hydroxylé et un prépolymère terminé NCO.

Une quantité allant jusque 0,3% en poids de catalyseur(s) par rapport au poids du milieu réactionnel de l'étape E2) peut être utilisée. En particulier, on préfère utiliser de 0,02 à 0,2% en poids de catalyseur(s) par rapport au poids total du milieu réactionnel de l'étape E2).

Le prépolymère de formule (IV) peut comprendre une teneur massique en groupes NCO (%NCO) allant de 0,1 à 15 %, de préférence de 0,3 à 10%, préférentiellement de 0,5 à 8%, avantageusement de 0,6 à 3% par rapport à la masse totale dudit prépolymère.

La présente invention concerne notamment un polyuréthane P' ayant la formule (V) suivante : 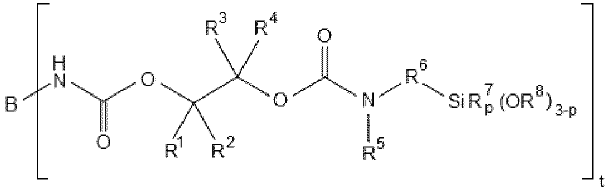 dans laquelle :
- B représente un radical organique multivalent ;
- t représente un nombre entier ou non entier pouvant aller de 2 à 4;
- R¹, R², R³ et R⁴ sont chacun, indépendamment les uns des autres, choisi dans le groupe constitué de : H ; un groupe alkyle linéaire ou ramifié comprenant de 1 à 20 atomes de carbone ; et un groupe -C(O)-X-R⁹ dans lequel :
   ∘ X représente un atome d'oxygène ou un radical NR¹⁰,
   ∘ R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
   ∘ R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone, ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 5 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone ; ou deux radicaux R⁸ peuvent former ensemble un cycle comprenant de 3 à 12 atomes de carbone ; et
- p représente 0, 1, ou 2 ;
à condition qu'un radical parmi les radicaux R¹, R², R³ ou R⁴ représente un groupe -C(O)-X-R⁹.

Chaque occurrence de chacun de R¹, R², R³, R⁴, R⁵, R⁶, R⁷, R⁸, R⁹, X, R¹⁰, et p, peut être identique ou différente dans chaque motif de répétition. Par exemple, lorsque t = 2, il existe deux motifs de répétition qui peuvent être identiques ou différents. Par exemple, lorsque t=3, il existe trois motifs de répétition qui peuvent être identiques ou différents.

Le polyuréthane P' peut être un exemple particulier de polymère P susmentionné.

Le polyuréthane P' a de préférence la formule (VI) suivante : 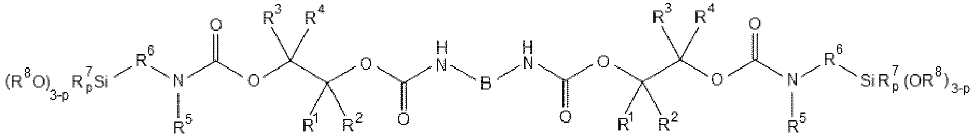 dans laquelle :
- R¹, R², R³ et R⁴ sont chacun, indépendamment les uns des autres, choisi dans le groupe constitué de : H ; un groupe alkyle linéaire ou ramifié comprenant de 1 à 20 atomes de carbone ; et un groupe -C(O)-X-R⁹ dans lequel :
   ∘ X représente un atome d'oxygène ou un radical NR¹⁰,
   ∘ R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
   ∘ R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène ou un radical alkyle, linéaire ou branché, cyclique ou aliphatique, comprenant de 1 à 20 atomes de carbone, de préférence de 1 à 12 atomes de carbone ;
- R⁶ représente un radical alkylène, linéaire ou branché, cyclique ou aliphatique, comprenant de 1 à 12 atomes de carbone, de préférence de 1 à 5 atomes de carbone ;
- R⁷ et R⁸ représentent chacun, indépendamment l'un de l'autre, un radical alkyle, linéaire ou branché, cyclique ou aliphatique, comprenant de 1 à 12 atomes de carbone, de préférence de 1 à 5 atomes de carbone ; et
- p représente 0, 1, ou 2 ;
à condition qu'un radical parmi les radicaux R¹, R², R³ ou R⁴ représente un groupe -C(O)-X-R⁹.

Chaque occurrence de chacun de R¹, R², R³, R⁴, R⁵, R⁶, R⁷, R⁸, R⁹, X, R¹⁰, et p peut être identique ou différente.

Par « chaque occurrence de chacun de R¹, R², R³, R⁴, R⁵, R⁶, R⁷, R⁸, R⁹, X, R¹⁰, et p, pouvant être identique ou différente », on entend par exemple que chaque occurrence de R¹ dans la formule (VI) peut être identique ou différente, ou encore que chaque occurrence de p peut être identique ou différente dans la formule (VI). Il en va de même pour l'ensemble des radicaux cités. Par exemple, un radical R¹ de la formule (VI) peut représenter H, tandis que l'autre R¹ peut représenter un radical -C(O)XR⁹.

Selon un mode de réalisation, dans la formule (VI) ci-dessus, chaque occurrence de chacun de R⁵, R⁶, R⁷, R⁸, R⁹, X, R¹⁰, et p est identique, et chaque occurrence de chacun de R¹, R², R³, et R⁴ peuvent être identiques ou différentes.

Le polyuréthane P' selon l'invention a de préférence l'une des formules (VII), (VIII) ou (IX) suivantes : 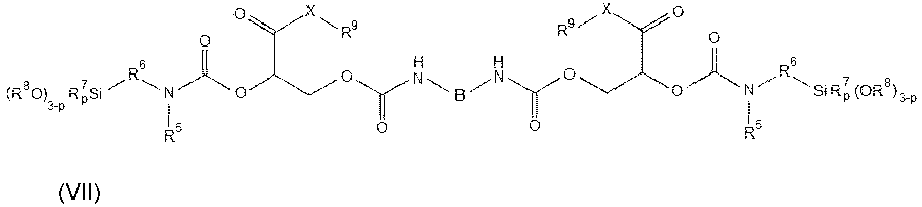 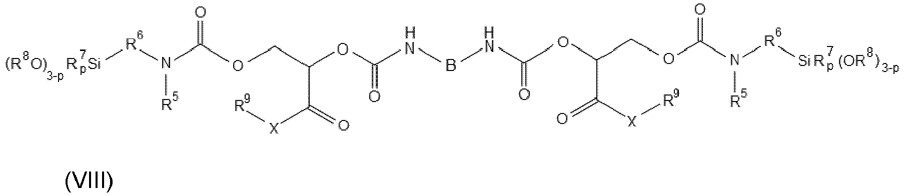 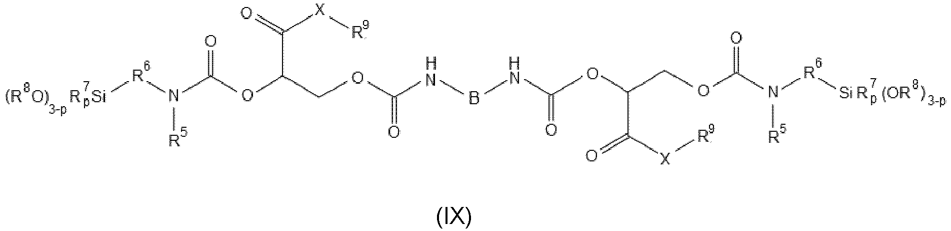 dans lesquelles R⁵, R⁶, R⁷, R⁸, R⁹, X, et p sont tels que définis précédemment.

Selon un mode de réalisation, les polyuréthanes P' des formules (V), (VI), (VII), (VIII) et (IX), sont ceux pour lesquels :
- p = 0 ; et/ou
- R⁸ = méthyle ; et/ou
- R⁶ = propylène ; et/ou
- R⁵ = H ou butyle.

En particulier, les polyuréthanes P' des formules (V), (VI), (VII), (VIII) et (IX), sont ceux pour lesquels :
- p = 0 ; et
- R⁸ = méthyle ; et
- R⁶ = propylène ; et
- R⁵ = H ou butyle.

De préférence, dans les polyuréthanes P' des formules (V), (VI), (VII), (VIII) et (IX), le groupe R⁹ représente :
- un groupe alkyle linéaire comprenant de 1 à 12 atomes de carbone, de préférence de 1 à 5 atomes de carbone, préférentiellement un groupe butyle ; ou
- un groupe alkyle ramifié comprenant de 1 à 12 atomes de carbone, de préférence de 5 à 12 atomes de carbone, de préférence un groupe -CH₂-CH(CH₂CH₃)-(CH₂)₃-CH₃ ; ou
- un groupe de formule -(CH(Me)-CH₂-O)ₙ-(CH₂)ₘ-CH₃, dans laquelle m et n représente chacun un nombre entier allant de 1 à 5, de préférence de 1, 2 ou 3.

Selon un mode de réalisation, dans les polyuréthanes P' des formules (V), (VI), (VII), (VIII) et (IX), le groupe R¹⁰ représente un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations.

De préférence, le groupe R¹⁰ représente un radical alkyle linéaire comprenant de 1 à 12 atomes de carbone, préférentiellement de 1 à 5 atomes de carbone, le groupe R¹⁰ étant avantageusement un méthyle.

La présente invention concerne également l'utilisation des polyuréthanes susmentionnés (P et P') pour la préparation d'adhésifs, mastics ou revêtements.

Les polyuréthanes silylés selon l'invention ont avantageusement une viscosité inférieure aux polymères silylés existants, ce qui rend leur manipulation et leur utilisation plus aisées.

### E. Compositions de polymères

La présente invention concerne une composition V comprenant au moins deux, de préférence au moins trois, polyuréthanes P (ou P') selon l'invention.

La composition V peut avoir une viscosité Brookfield mesurée à 100°C, allant de 100 à 3 000 mPa.s.

De préférence, la composition V comprend :
- un polyuréthane P' de formule (VII) telle que définie ci-dessus ;
- un polyuréthane P' de formule (VIII) telle que définie ci-dessus ; et
- un polyuréthane P' de formule (IX) telle que définie ci-dessus ;
chaque occurrence de chacun de R⁵, R⁶, R⁷, R⁸, R⁹, X, R¹⁰, et p étant de préférence identique.

### F. Formulations

La présente invention concerne une formulation comprenant au moins un polyuréthane P ou P' selon l'invention, et au moins un additif choisi dans le groupe constitué des catalyseurs, des charges, des antioxydants, des stabilisants à la lumière/ absorbeurs d'UV, des désactivateurs de métaux, des antistatiques, des agents moussants, des biocides, des plastifiants, des lubrifiants, des émulsifiants, des colorants, des pigments, des agents rhéologiques, des modificateurs d'impact, des promoteurs d'adhésion, des azurants optiques, des ignifugeants, des agents anti-suintement, des agents de nucléation, des solvants, des diluants réactifs et de leurs mélanges.

La formulation susmentionnée comprend avantageusement:
- un polyuréthane P' de formule (VII) telle que définie ci-dessus ;
- un polyuréthane P' de formule (VIII) telle que définie ci-dessus ; et
- un polyuréthane P' de formule (IX) telle que définie ci-dessus ;
chaque occurrence de chacun de R⁵, R⁶, R⁷, R⁸, R⁹, X, R¹⁰, et p étant de préférence identique.

Les charges habituellement utilisées sont, par exemple, des poudres inorganiques ou organiques, par exemple les carbonates et les silicates de calcium, des matériaux fibreux inorganiques, par exemple des fibres de verre. Il est également possible d'utiliser des charges organiques telles que des fibres de carbone, des mélanges de charges organiques et inorganiques, par exemple des mélanges de fibres de verre et de carbone ou, des mélanges de fibres de carbone et de charges inorganiques. Les charges peuvent être ajoutées en une quantité allant de 1 à 75% en poids, par rapport au poids total de la formulation.

Les stabilisants UV, les antioxydants ainsi que les désactivateurs de métaux utilisés dans les formulations selon l'invention présentent avantageusement une bonne résistance à la migration et une grande stabilité thermique. Ils sont choisis par exemple parmi les groupes a) à t) suivants. Les composés des groupes a) à g) et i) sont des stabilisants à la lumière / absorbeurs d'UV, tandis que les composés j) à t) agissent en tant que stabilisants :
a) les 4,4-diarylbutadiènes
b) les esters cinnamiques,
c) les benzotriazoles,
d) les hydroxybenzophénones,
e) les cyanacrylates diphényliques,
f) les oxamides,
g) les 2-phényl-1,3,5-triazines,
h) les antioxydants,
i) les dérivés du nickel,
j) les amines stériquement encombrées,
k) les désactivateurs de métaux,
l) les phosphites et phosphonites,
m) les hydroxylamines,
n) les nitrones,
o) les oxydes d'amines,
p) les benzofuranones et les indolinones,
q) les thiosynergistes,
r) les destructeurs de peroxydes,
s) les stabilisants de polyamide et
t) les co-stabilisants basiques.

Les catalyseurs sont éventuellement utilisés dans des proportions allant de 0,01% à environ 10 % en poids, par rapport au poids total de la formulation.

Le catalyseur peut être choisi parmi :
- des dérivés organiques du titane comme par exemple l'acétyl acétonate de titane (disponible commercialement sous la dénomination TYZOR^{®} AA75 auprès de la société DuPont), le Ti(OnBu)₄ (disponible commercialement sous la dénomination TYZOR^{®} TnBT chez DORF Ketal) ;
- des dérivés organiques de l'aluminium comme par exemple le chélate d'aluminium (disponible commercialement sous la dénomination K-KAT^{®} 5218 auprès de la société King Industries),
- des dérivés organiques de zinc comme par exemple le Zn[O(C=O)C₉H₁₉]₂ (disponible auprès de la société OMG BORCHERS sous la dénomination commerciale BORCHI^{®} KAT 15) ;
- des dérivés organiques de bismuth comme par exemple le Bi[O(C=O)C₉H₁₉]₂ (disponible auprès de la société OMG BORCHERS sous la dénomination commerciale BORCHI^{®} KAT 315) ;
- des dérivés organiques de l'étain comme par exemple le dilaurate de dibutyle étain (ou DBTL), le dibutylétain dilaurate (DOTDL), le dioctylétain bisacétylacétonate, (disponible sous la dénomination TIBKAT^{®} 223) ou le TibKat^{®} 425 (qui est un mélange dioctyl étain oxyde et vinyltriméthoxysilane),
- des amines organiques, la préférence est donnée aux amidines, par exemple le 1,8-diazabicyclo[5.4.0]undéc-7-ène (DBU) et le 1,5-diazabicyclo [4.3.0]non-5-ène (DBN), le 1,5,7-Triazabicyclo[4.4.0]dec-5-ène (TBD), le di-o-tolylguanidine (DOTG), et les mono-, di- et trialkylamines C1 à C6, en particulier la triéthylamine et la tert-butylamine.

Le choix des additifs utilisés est avantageusement fonction de l'utilisation finale qui est faite de la formulation selon l'invention, lesquels peuvent être ajustés en fonction du cahier des charges applicatif par l'homme du métier.

Les solvants peuvent être des solvants organiques, par exemple choisi parmi les solvants aprotiques, les solvants protiques et leurs mélanges.

La présente invention concerne également l'utilisation de la formulation susmentionnée pour la préparation d'adhésifs, mastics ou revêtements.

Tous les modes de réalisation décrits ci-dessus peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif, et ne sauraient être interprétés pour en limiter la portée.

### Exemples

### Fournisseurs :

SILQUEST A-1110 : 3-aminopropyltrimethoxysilane commercialisé par MOMENTIVE ;
DYNASYLAN 1189 : N-(n-butyl)-3-aminopropyltrimethoxysilane commercialisé par EVONIK. Le 2-oxo-1,3-dioxolane-4-carboxylate de butyle (composé de formule (Illa)), le 2-oxo-1,3-dioxolane-4-carboxylate d'ethyl-2-hexyle (composé de formule (lllb)), et le 2-oxo-1,3-dioxolane-4-carboxylate de 2-(2-butoxypropoxy)propyle (composé de formule (Illc)) ont été synthétisés selon la méthode décrite dans WO 2012/065879 ou WO 2011/157551. Le N-méthyl-N-butyl (2-oxo-1,3-dioxolane-4-carboxylamide (composé de formule (llld)) a été synthétisé tel que décrit dans WO 2013/092011.

### Exemple 1 :

Dans un réacteur de 2 litres, on introduit 2,0 moles de 2-oxo-1,3-dioxolane-4-carboxylate de butyle (376,3 g) de formule (IIIa) dans 300 ml de THF sec puis on ajoute à température ambiante 2,1 moles de 3-aminopropyltrimethoxysilane (376,5 g) à température ambiante et ce, jusqu'à disparition complète de la bande infrarouge caractéristique des groupements 2-oxo-1,3-dioxolane-4-yl (bande C=O à 1740 cm⁻¹ en Infra-Rouge), et l'apparition des bandes caractéristiques de la liaison carbamate (bande C=O à 1780 cm⁻¹ en Infra-Rouge)

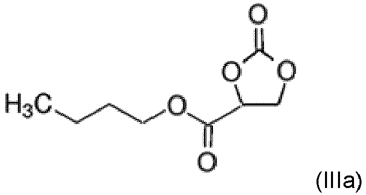

Puis, le THF est éliminé sous pression réduite pour obtenir quantitativement le mélange des 2 produit de formules suivantes :

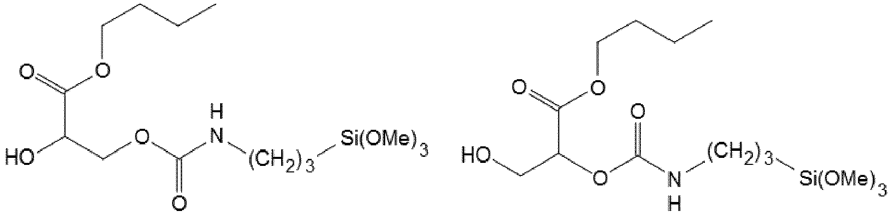

### Exemple 2 :

L'exemple 1 a été reproduit en substituant le composé de formule (IIIa) par le 2-oxo-1,3-dioxolane-4-carboxylate d'ethyl-2-hexyle (488,3 g) de formule (IIIb) :

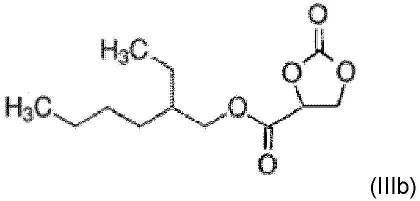

On obtient quantitativement le mélange des deux produits suivants :

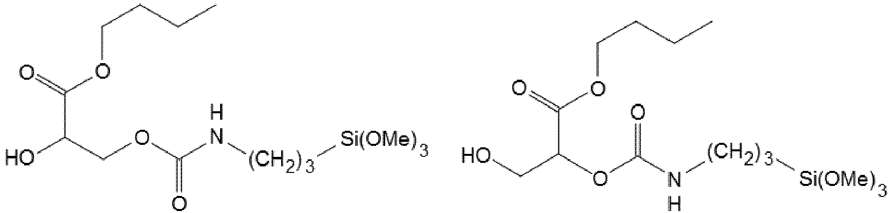

### Exemple 3 :

L'exemple 1 a été reproduit en substituant le composé de formule (IIIa) par le 2-oxo-1,3-dioxolane-4-carboxylate de 2-(2-butoxypropoxy)propyle (608,76 g) de formule (IIIc) (n = 2) :

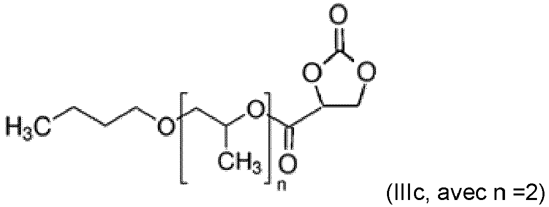

On obtient quantitativement le mélange des deux produits suivants :

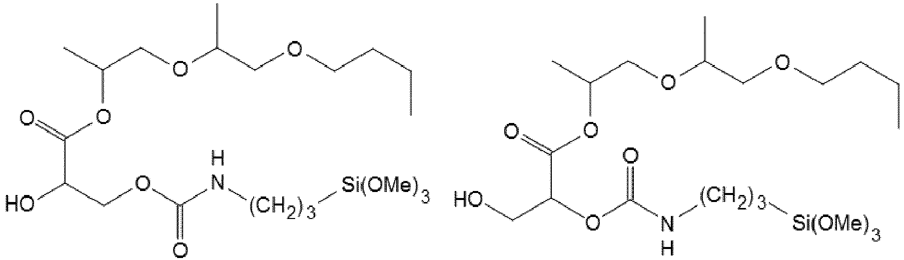

### Exemple 4 :

Dans un réacteur de 2 litres, 2,0 moles 2-oxo-1,3-dioxolane-4-carboxylate de butyle (376,3 g) de formule (IIIa) a été introduit dans 300 ml de THF sec, puis 2,1 moles de N-(n-butyl)-3-aminopropyltrimethoxysilane (494,3 g) ont été ajoutés à température ambiante. Le mélange est maintenu sous sous agitation à 50°C jusqu'à disparition complète de la bande infrarouge caractéristique des groupemens 2-oxo-1,3-dioxolane-4-yl.

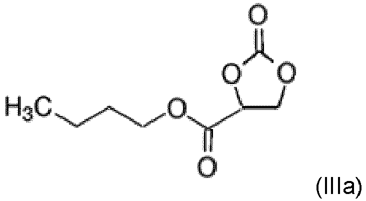

Puis le THF a été éliminé sous pression réduite pour obtenir quantitativement les produits suivants :

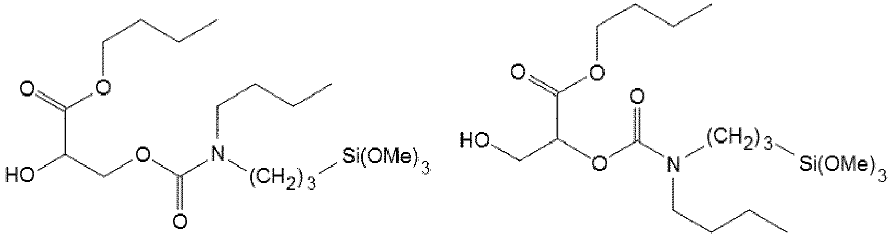

### Exemple 5 :

L'exemple 1 a été reproduit en substituant le 2-oxo-1,3-dioxolane-4-carboxylate de butyle de formule (IIIa) par la N-méthyl-N-butyl (2-oxo-1,3-dioxolane-4-carboxylamide (402,3 g) de formule (IIId).

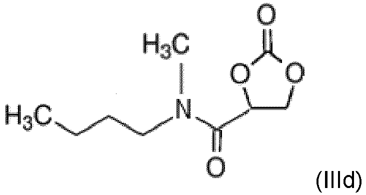

On obtient quantitativement le mélange des deux produits suivants :

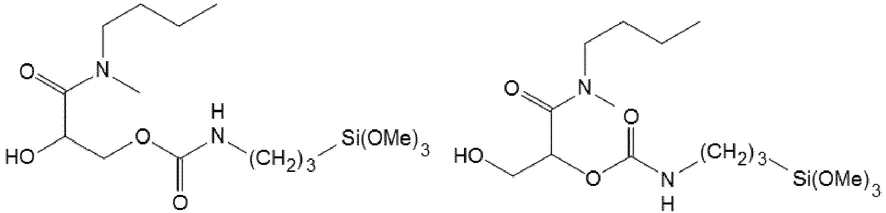

### Exemple 6 : Préparation du prépolymère terminé -NCO (P0)

Dans un réacteur de 2 litres, 683,5 g d'ACCLAIM 12200 (PPG disponible chez Covestro ayant un IOH = 11,0 mg KOH/g ou soit une Mn = 11200 g/mol) ont été introduits. Le milieu réactionnel a été laissé sous vide pendant 2 heures à 110°C (teneur en eau ≤ 0,02% en poids). Le réacteur a ensuite été refroidi à 70°C afin d'introduire sous azote 46,6 g d'isophorone diisocyanate (IPDI) et 0,4 g de BORCHIKAT 315 (néodécanoate de bismuth disponible chez OMG BORCHERS). Le mélange a été maintenu sous agitation jusqu'à atteindre un % NCO en poids de 1,7 % soit 0,40 méq NCO/g. On obtient 730,1 g de prépolymère polyuréthane terminé NCO (P0).

### Exemple 7 : préparation de polymère silylé

Dans un réacteur de 2 L, on introduit sous azote 237,6 g (0,096 mole ou 96 méq NCO) de prépolymère (P0), 36,7 g du mélange de l'exemple 1 (0,1 mole) dans un rapport molaire OH/NCO = 1,04, et 0,1 g de TIBKAT 223 (Dioctyltinbis(acetylacetonate)) disponible chez TIB CHEMICALS). Le mélange a été chauffé à 90°C, et mélangé jusqu'à ce que la bande caractéristique des fonctions -NCO ne soit plus détectable par spectroscopie infra-rouge. 273,2 g de polyuréthanes silylés ont été obtenu, et conditionné dans des cartouches en aluminium à l'abri de l'humidité. La viscosité Brookfield du mélange obtenu est de 1520 mPa.s à 100°C.

### Exemple 8 : préparation de polymère silylé

Dans un réacteur de 2 L, on introduit sous azote 237,6 g (0,096 mole ou 96 méq NCO) de prépolymère (P0), 42,4 g du mélange de l'exemple 2 (0,1 mole) dans un rapport molaire OH/NCO = 1,04, et 0,1 g de TIBKAT 223 (Dioctyltinbis(acetylacetonate) disponible chez TIB CHEMICALS). Le mélange a été chauffé à 90°C, et mélangé jusqu'à ce que la bande caractéristique des fonctions -NCO ne soit plus détectable par spectroscopie infra-rouge. On obtient 276,2 g de polyuréthanes silylés qui est conditionné dans des cartouches en aluminium à l'abri de l'humidité. La viscosité Brookfield du mélange obtenu est de 1300 mPa.s à 100°C.

### Exemple 9 : préparation de polymère silylé

Dans un réacteur de 2 L, on introduit sous azote 237,6 g (0,096 mole ou 96 méq NCO) de prépolymère (P0), 48,4 g du mélange de l'exemple 3 (0,1 mole) dans un rapport molaire OH/NCO = 1,04, et 0,1g de TIBKAT 223 (Dioctyltinbis(acetylacetonate) disponible chez TIB CHEMICALS). Le mélange a été chauffé à 90°C, et mélangé jusqu'à ce que la bande caractéristique des fonctions -NCO ne soit plus détectable par spectroscopie infra-rouge. On obtient 287,8 g de polyuréthanes silylés (SPUR 3) qui est conditionné dans des cartouches en aluminium à l'abri de l'humidité. La viscosité du mélange obtenu est de 1260 mPa.s à 100°C.

### Exemple 10 : préparation de polymère silylé

Dans un réacteur de 2 L, on introduit sous azote 237,6 g (0,096 mole ou 96 méq NCO) de prépolymère (P0), 42,4 g du mélange obtenu à l'exemple 4 (0,1 mole) dans un rapport molaire OH/NCO = 1,04, et 0,1g de TIBKAT 223 (Dioctyltinbis(acetylacetonate) disponible chez TIB CHEMICALS). Le mélange a été chauffé à 90°C, et mélangé jusqu'à ce que la bande caractéristique des fonctions -NCO ne soit plus détectable par spectroscopie infra-rouge. On obtient 287,8 g de polyuréthanes silylés qui est conditionné dans des cartouches en aluminium à l'abri de l'humidité. La viscosité du mélange obtenu est de 1390 mPa.s à 100°C.

### Exemple 11 : préparation de polymère silvlé

Dans un réacteur de 2 L, on introduit sous azote 237,6 g (0,096 mole ou 96 méq NCO) de prépolymère (P0), 38,0 g du mélange obtenu à l'exemple 4 (0,1 mole) dans un rapport molaire OH/NCO = 1,04 et 0,1g de TIBKAT 223 (Dioctyltinbis(acetylacetonate) disponible chez TIB CHEMICALS). Le mélange a été chauffé à 90°C, et mélangé jusqu'à ce que la bande caractéristique des fonctions -NCO ne soit plus détectable par spectroscopie infra-rouge. On obtient 287,8 g de polyuréthanes silylés qui est conditionné dans des cartouches en aluminium à l'abri de l'humidité. La viscosité du mélange obtenu est de 1420 mPa.s à 100°C.

### Exemple 12 : préparation de polymère silylé comparatif

Dans un réacteur de 2 L, on introduit sous azote 237,6 g (0,096 mole ou 96 méq NCO) de prépolymère **(P0)** et 17,9 g (0,1 mole ou 100 méq NH2) de 3-aminopropyltriméthoxysilane (SILQUEST A-1110 de MOMENTIVE) dans un rapport molaire NH2 / NCO = 1,04. Le mélange est chauffé à 70°C et mélangé jusqu'à ce que la bande caractéristique des fonctions -NCO ne soit plus détectable par spectroscopie infra-rouge. On obtient 255,5 g de polyuréthane silylé que l'on conditionn dans des cartouches en aluminium à l'abri de l'humidité. La viscosité du polyuréthane silylé obtenu est de 5 500 mPa.s à 100°C.

Ainsi, la viscosité des polymères silylés des exemples 7 à 11 ont avantageusement une viscosité inférieure à celle du polymère silylé de l'exemple 12 (comparatif) (à 100°C), ce qui permet notamment une manipulation et une utilisation plus aisées. En outre, une viscosité moindre permet avantageusement d'éviter l'utilisation additionnelle de plastifiant dans les formulations.

## Revendications

1. Composé de formule (I) : 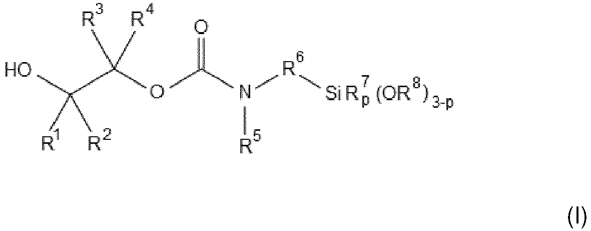 dans laquelle :
- R¹, R², R³ et R⁴ sont chacun, indépendamment les uns des autres, choisi dans le groupe constitué de : H ; un groupe alkyle linéaire ou ramifié comprenant de 1 à 20 atomes de carbone ; et un groupe -C(O)-X-R⁹ dans lequel :
∘ X représente un atome d'oxygène ou un radical NR¹⁰,
∘ R⁹ est choisi dans le groupe constitué de : un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
∘ R¹⁰ est choisi dans le groupe constitué de : un atome d'hydrogène, un groupe alkyle linéaire ou ramifié, aliphatique ou cyclique, comprenant de 1 à 60 atomes de carbone, de préférence de 1 à 20 atomes de carbone, préférentiellement de 1 à 12 atomes de carbone, ledit groupe alkyle pouvant être interrompu par un ou plusieurs hétéroatomes choisis parmi O et S, ledit groupe alkyle pouvant comprendre une ou plusieurs insaturations; un groupe aryle comprenant de 6 à 24 atomes de carbone, de préférence de 6 à 12 atomes de carbone ; et un groupe arylalkyle dans lequel le groupe alkyle comprend de 1 à 12 atomes de carbone ;
- R⁵ représente un atome d'hydrogène, un radical alkyle, linéaire ou branché, cyclique ou aliphatique, comprenant de 1 à 20 atomes de carbone, de préférence de 1 à 12 atomes de carbone, ou un radical -R⁶-SiR⁷ₚ(OR⁸)₃₋ₚ ;
- R⁶ représente un radical alkylène, linéaire ou branché, cyclique ou aliphatique, comprenant de 1 à 12 atomes de carbone, de préférence de 1 à 5 atomes de carbone ;
- R⁷ représente un radical alkyle, linéaire ou branché, cyclique ou aliphatique, comprenant de 1 à 12 atomes de carbone, de préférence de 1 à 5 atomes de carbone ;
- chaque R⁸ représente, indépendamment les uns des autres, un radical alkyle, linéaire ou branché, cyclique ou aliphatique, comprenant de 1 à 12 atomes de carbone, de préférence de 1 à 5 atomes de carbone ; ou deux radicaux R⁸ peuvent former ensemble un cycle comprenant de 3 à 12 atomes de carbone ; et
- p représente 0, 1, ou 2 ;
à condition qu'un radical parmi les radicaux R¹, R², R³ ou R⁴ représente un groupe -C(O)-X-R⁹.

2. Composé selon la revendication 1, ayant la formule (I-1) suivante : 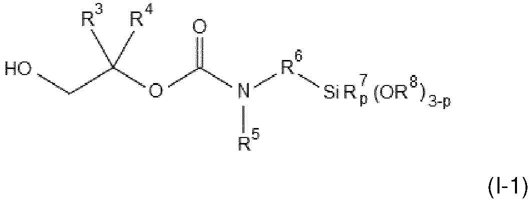 dans laquelle R³, R⁴, R⁵, R⁶, R⁷, R⁸, et p sont tels que définis dans la revendication 1, un radical de R³ ou R⁴ représentant un groupe -C(O)-X-R⁹, X et R⁹ étant tels que définis dans la revendication 1.

3. Composé selon la revendication 2, **caractérisé en ce qu'**il est choisi parmi :
- les composés de formule (I-1-A) dans laquelle R³, R⁴, R⁵, R⁶, R⁷, R⁸, et p sont tels que définis dans la revendication 1, et un radical de R³ ou R⁴ représente un groupe -C(O)-O-R⁹, R⁹ étant tel que défini dans la revendication 1;
et
- les composés de formule (I-1-B) dans laquelle R³, R⁴, R⁵, R⁶, R⁷, R⁸, et p sont tels que définis dans la revendication 1, et un radical de R³ ou R⁴ représente un groupe -C(O)-N(R¹⁰)-R⁹, R⁹ et R¹⁰ étant tels que définis dans la revendication 1.

4. Composé selon la revendication 1, ayant la formule (I-2) suivante : 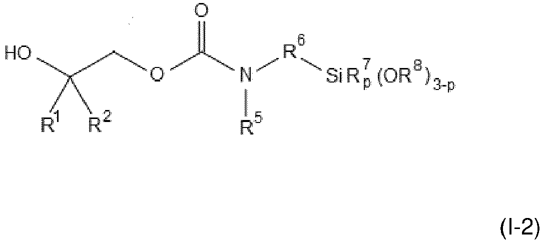 dans laquelle R¹, R², R⁵, R⁶, R⁷, R⁸, et p sont tels que définis dans la revendication 1, un radical de R¹ ou R² représentant un groupe -C(O)-X-R⁹, X et R⁹ étant tels que définis dans la revendication 1.

5. Composé selon la revendication 4, **caractérisé en ce qu'**il est choisi parmi :
- les composés de formule (I-2-A) dans laquelle R¹, R², R⁵, R⁶, R⁷, R⁸ et p sont tels que définis dans la revendication 1, et un radical de R¹ ou R² représente un groupe -C(O)-O-R⁹, R⁹ étant tel que défini dans la revendication 1;
ou
- les composés de formule (I-2-B) dans laquelle R¹, R², R⁵, R⁶, R⁷, R⁸, et p sont tels que définis dans la revendication 1, et un radical de R¹ ou R² représente un groupe -C(O)-N(R¹⁰)-R⁹, R⁹ et R¹⁰ étant tels que définis dans la revendication 1.

6. Composé selon la revendication 2, ayant la formule (I-3) suivante : 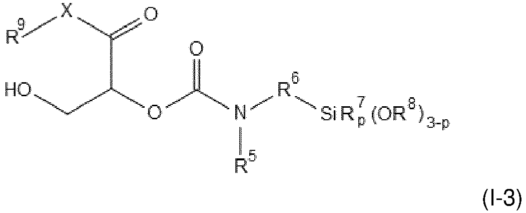 dans laquelle R⁵, R⁶, R⁷, R⁸, X, R⁹ et p sont tels que définis dans la revendication 1.

7. Composé selon la revendication 4, ayant la formule (I-4) suivante : 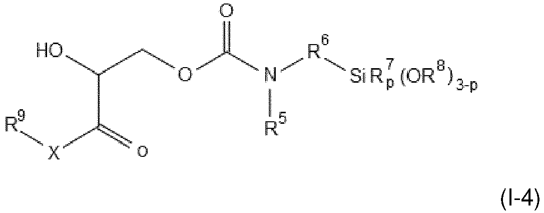 dans laquelle R⁵, R⁶, R⁷, R⁸, X, R⁹ et p sont tels que définis dans la revendication 1.

8. Composé selon l'une quelconque des revendications 1 à 7, **caractérisé en ce que** :
- p = 0 ; et/ou
- R⁸ = méthyle ; et/ou
- R⁶ = propylène ; et/ou
- R⁵ = H ou butyle.

9. Composé selon l'une quelconque des revendications 1 à 8, choisi parmi les composés suivants :

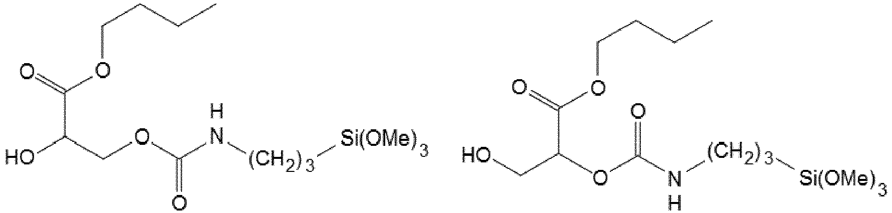

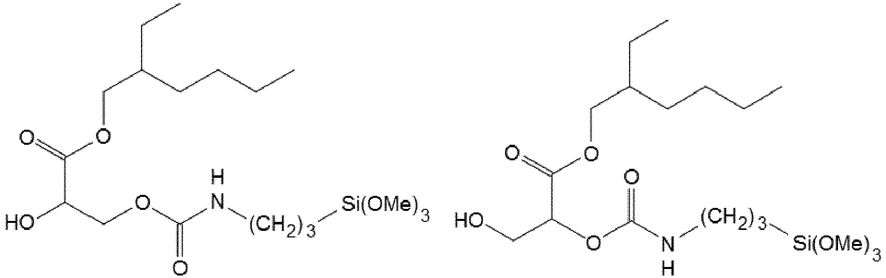

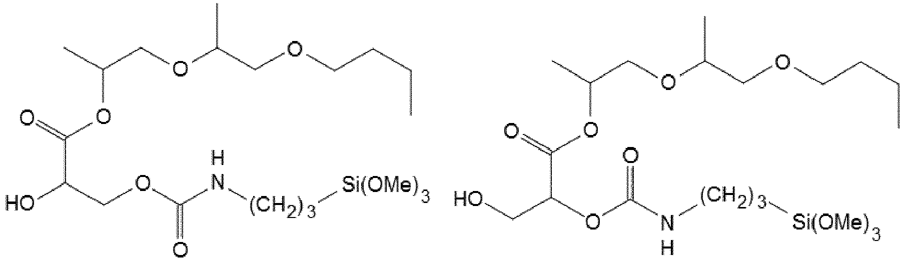

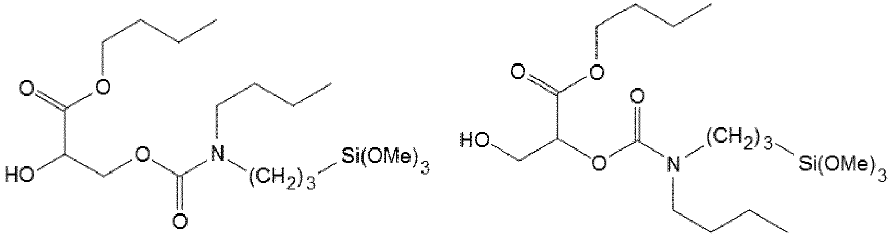

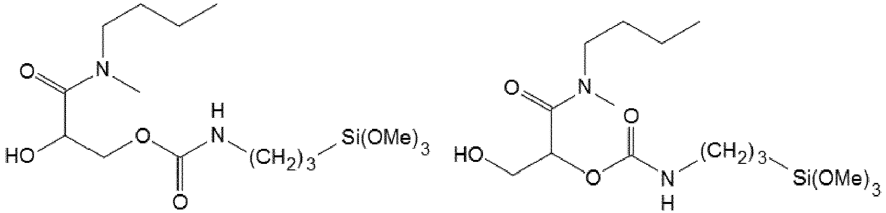

10. Procédé de préparation d'un composé de formule (I) telle que définie selon l'une quelconque des revendications 1 à 9, comprenant la réaction entre un composé de formule (II) : 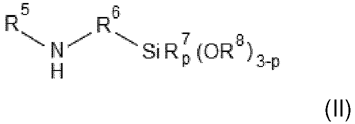
dans laquelle R⁵, R⁶, R⁷, R⁸ et p sont tels que définis selon l'une quelconque des revendications 1 à 9;
avec un composé de formule (III) suivante : 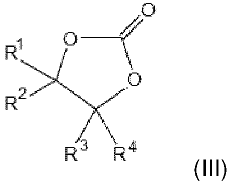 dans laquelle R¹, R², R³ et R⁴ sont tels que définis selon l'une quelconque des revendications 1 à 11, un radical parmi les radicaux R¹, R², R³ ou R⁴ représentant un groupe -C(O)-X-R⁹ avec X et R⁹ étant tels que définis selon l'une quelconque des revendications 1 à 9.

11. Composition C comprenant deux composés de formule (I) différents tels que définis selon l'une quelconque des revendications 1 à 9.

12. Composition C selon la revendication 11, comprenant :
- un composé de formule (I-3) : 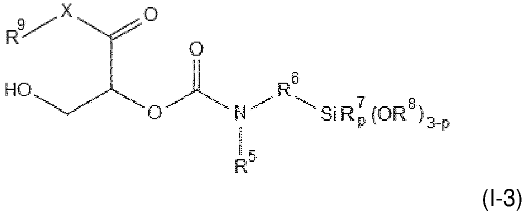 et
- un composé de formule (I-4) : 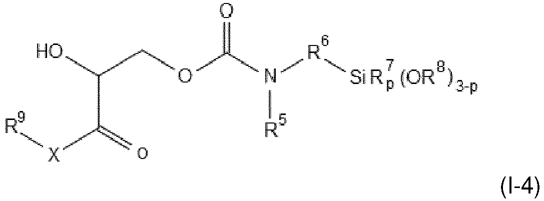 dans lesquelles R⁵, R⁶, R⁷, R⁸, R⁹, X et p sont tels que définis dans l'une quelconque des revendications 1 à 9.

13. Polyuréthane P obtenu par un procédé comprenant une étape de réaction entre :
- au moins un, de préférence d'au moins deux, composé(s) de formule (I) telle que définie selon l'une quelconque des revendications 1 à 9, et
- un prépolymère, de préférence prépolymère polyuréthane, de formule (IV) suivante : 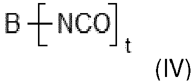 dans laquelle t représente un nombre entier ou non entier allant de 2 à 4, et B représente un radical organique multivalent.

14. Polyuréthane P' ayant la formule (V) suivante : 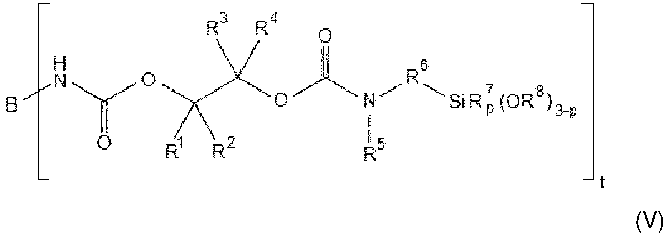 dans laquelle :
- B et t sont tels que définis dans la revendication 13 ;
- R¹, R², R³, R⁴, R⁹, R⁵, R⁶, R⁷, R⁸, R⁹, X et p sont tels que définis selon l'une quelconque des revendications 1 à 9.

15. Formulation comprenant au moins un polyuréthane P tel que défini selon la revendication 13, ou un polyuréthane P' selon la revendication 14, et au moins un additif choisi dans le groupe constitué : des catalyseurs, des charges, des antioxydants, des stabilisants à la lumière/ absorbeurs d'UV, des désactivateurs de métaux, des antistatiques, des agents moussants, des biocides, des plastifiants, des lubrifiants, des émulsifiants, des colorants, des pigments, des agents rhéologiques, des modificateurs d'impact, des promoteurs d'adhésion, des azurants optiques, des ignifugeants, des agents anti-suintement, des agents de nucléation, des solvants, des diluants réactifs et de leurs mélanges.

16. Utilisation de la formulation selon la revendication 15, ou d'un polyuréthane P selon la revendication 13, ou d'un polyuréthane P' selon la revendication 14, pour la préparation d'adhésifs, de revêtements ou de mastics.

## Patentansprüche

1. Verbindung der Formel (I): 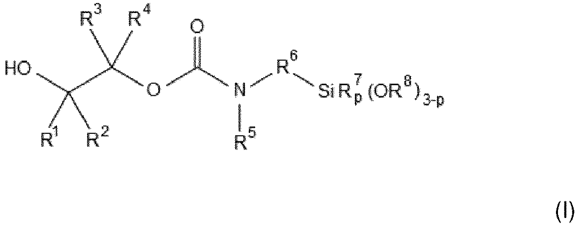 in welcher:
- R¹, R², R³ und R⁴ jeweils unabhängig voneinander aus der Gruppe ausgewählt sind, welche aus Folgendem besteht: H; einer geradkettigen oder verzweigten Alkylgruppe, die 1 bis 20 Kohlenstoffatome umfasst; und einer Gruppe -C(O)-X-R⁹, in welcher:
∘ X für ein Sauerstoffatom oder einen Rest NR¹⁰ steht,
∘ R⁹ aus der Gruppe ausgewählt ist, die aus Folgendem besteht: einer geradkettigen oder verzweigten Alkylgruppe aliphatischer oder zyklischer Art, die 1 bis 60 Kohlenstoffatome, vorzugsweise 1 bis 20 Kohlenstoffatome, bevorzugt 1 bis 12 Kohlenstoffatome umfasst, wobei die Alkylgruppe von einem oder mehreren Heteroatomen unterbrochen sein kann, die aus O und S ausgewählt sind, wobei die Alkylgruppe eine oder mehrere ungesättigte Stellen umfassen kann; einer Arylgruppe, die 6 bis 24 Kohlenstoffatome, vorzugsweise 6 bis 12 Kohlenstoffatome umfasst; und einer Arylalkylgruppe, in welcher die Alkylgruppe 1 bis 12 Kohlenstoffatome umfasst;
∘ R¹⁰ aus der Gruppe ausgewählt ist, die aus Folgendem besteht: einem Wasserstoffatom, einer geradkettigen oder verzweigten Alkylgruppe aliphatischer oder zyklischer Art, die 1 bis 60 Kohlenstoffatome, vorzugsweise 1 bis 20 Kohlenstoffatome, bevorzugt 1 bis 12 Kohlenstoffatome umfasst, wobei die Alkylgruppe von einem oder mehreren Heteroatomen unterbrochen sein kann, die aus O und S ausgewählt sind, wobei die Alkylgruppe eine oder mehrere ungesättigte Stellen umfassen kann; einer Arylgruppe, die 6 bis 24 Kohlenstoffatome, vorzugsweise 6 bis 12 Kohlenstoffatome umfasst; und einer Arylalkylgruppe, in welcher die Alkylgruppe 1 bis 12 Kohlenstoffatome umfasst;
- R⁵ für ein Wasserstoffatom, einen geradkettigen oder verzweigten Alkylrest zyklischer oder aliphatischer Art, der 1 bis 20 Kohlenstoffatome, vorzugsweise 1 bis 12 Kohlenstoffatome umfasst, oder einen Rest -R⁶-SiR⁷ₚ(OR⁸)₃₋ₚ steht;
- R⁶ für einen geradkettigen oder verzweigten Alkylenrest zyklischer oder aliphatischer Art steht, der 1 bis 12 Kohlenstoffatome, vorzugsweise 1 bis 5 Kohlenstoffatome umfasst;
- R⁷ für einen geradkettigen oder verzweigten Alkylrest zyklischer oder aliphatischer Art steht, der 1 bis 12 Kohlenstoffatome, vorzugsweise 1 bis 5 Kohlenstoffatome umfasst;
- die R⁸ für jeweils unabhängig voneinander für einen geradkettigen oder verzweigten Alkylrest zyklischer oder aliphatischer Art steht, der 1 bis 12 Kohlenstoffatome, vorzugsweise 1 bis 5 Kohlenstoffatome umfasst; oder zwei R⁸-Reste gemeinsam einen Ring bilden können, der 3 bis 12 Kohlenstoffatome umfasst; und
- p für 0, 1 oder 2 steht;
mit der Maßgabe, dass ein Rest von den Resten R¹, R², R³ oder R⁴ für eine Gruppe -C(O)-X-R⁹ steht.

2. Verbindung nach Anspruch 1, welche die folgende Formel (1-1) hat: 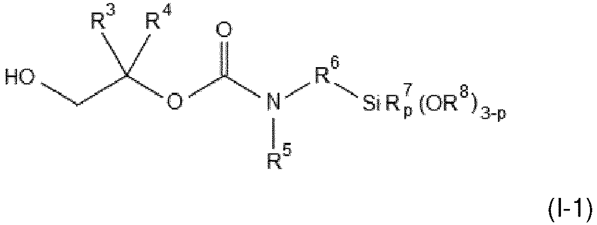 in welcher R³, R⁴, R⁵, R⁶, R⁷, R⁸ und p den Begriffsbestimmungen in Anspruch 1 entsprechen, ein Rest von R³ oder R⁴ für eine Gruppe -C(O)-X-R⁹ steht, wobei X und R⁹ den Begriffsbestimmungen in Anspruch 1 entsprechen.

3. Verbindung nach Anspruch 2, **dadurch gekennzeichnet, dass** sie aus Folgendem ausgewählt ist:
- den Verbindungen der Formel (1-1-A), in welcher R³, R⁴, R⁵, R⁶, R⁷, R⁸ und p den Begriffsbestimmungen in Anspruch 1 entsprechen, und ein Rest von R³ oder R₄ für eine Gruppe -C(O)-O-R⁹ steht, wobei R⁹ der Begriffsbestimmung in Anspruch 1 entspricht;
und
- den Verbindungen der Formel (I-1-B), in welcher R³, R⁴, R⁵, R⁶, R⁷, R⁸ und p den Begriffsbestimmungen in Anspruch 1 entsprechen, und ein Rest von R³ oder R⁴ für eine Gruppe -C (O)-N(R¹⁰)-R⁹ steht, wobei R⁹ und R¹⁰ den Begriffsbestimmungen in Anspruch 1 entsprechen.

4. Verbindung nach Anspruch 1, welche die folgende Formel (1-2) hat: 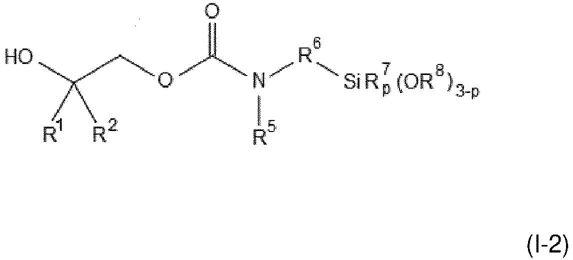 in welcher R¹, R², R⁵, R⁶, R⁷, R⁸ und p den Begriffsbestimmungen in Anspruch 1 entsprechen, ein Rest von R¹ oder R² für eine Gruppe -C(O)-X-R⁹ steht, wobei X und R⁹ den Begriffsbestimmungen in Anspruch 1 entsprechen.

5. Verbindung nach Anspruch 4, **dadurch gekennzeichnet, dass** sie aus Folgendem ausgewählt ist:
- den Verbindungen der Formel (I-2-A), in welcher R¹, R², R⁵, R⁶, R⁷, R⁸ und p den Begriffsbestimmungen in Anspruch 1 entsprechen und ein Rest von R¹ oder R² für eine Gruppe -C(O)-O-R⁹ steht, wobei R⁹ den Begriffsbestimmungen in Anspruch 1 entspricht;
oder
- den Verbindungen der Formel (I-2-B), in welcher R¹, R², R⁵, R⁶, R⁷, R⁸ und p den Begriffsbestimmungen in Anspruch 1 entsprechen und ein Rest von R¹ oder R² für eine Gruppe -C (O)-N(R¹⁰)-R⁹ steht, wobei R⁹ und R¹⁰ den Begriffsbestimmungen in Anspruch 1 entsprechen.

6. Verbindung nach Anspruch 2, welche die folgende Formel (1-3) hat: 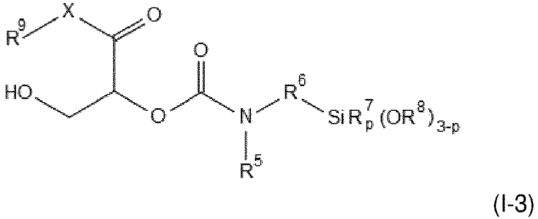 in welcher R⁵, R⁶, R⁷, R⁸, X, R⁹ und p den Begriffsbestimmungen in Anspruch 1 entsprechen.

7. Verbindung nach Anspruch 4, welche die folgende Formel (1-4) hat: 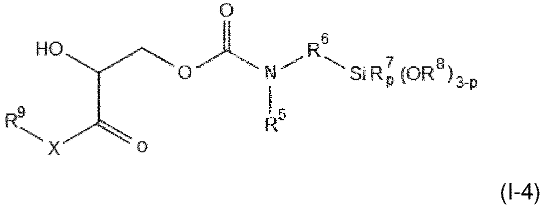 in welcher R⁵, R⁶, R⁷, R⁸, X, R⁹ und p den Begriffsbestimmungen in Anspruch 1 entsprechen.

8. Verbindung nach einem beliebigen der Ansprüche 1 bis 7, **dadurch gekennzeichnet, dass**:
p = 0 ist; und/oder
R⁸ = Methyl ist; und/oder
R⁶ = Propylen ist; und/oder
R⁵ = H oder Butyl ist.

9. Verbindung nach einem beliebigen der Ansprüche 1 bis 8, die aus den folgenden Verbindungen ausgewählt ist:

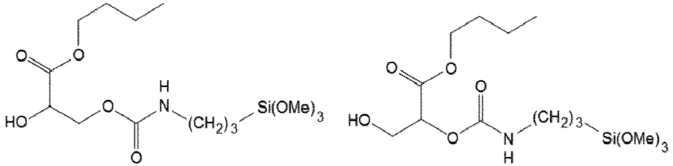

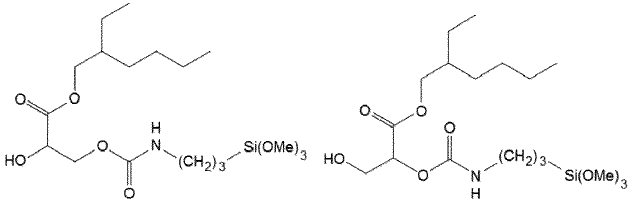

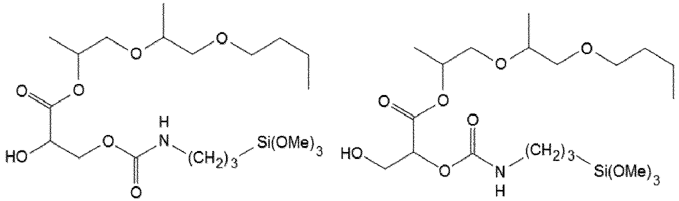

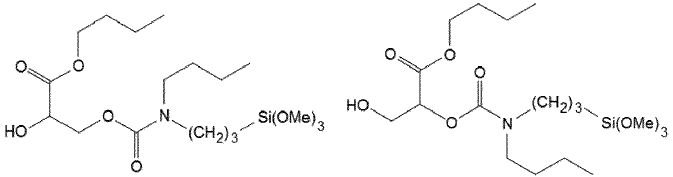

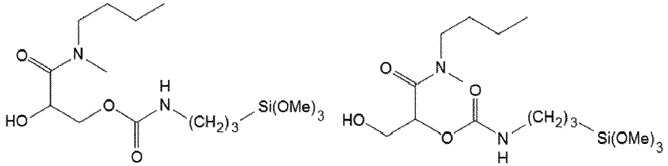

10. Verfahren zur Herstellung einer Verbindung nach Formel (I) gemäß den Begriffsbestimmungen in einem beliebigen der Ansprüche 1 bis 9, wobei es die Reaktion zwischen einer Verbindung der Formel (II): 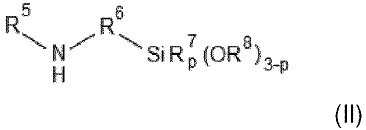
in welcher R⁵, R⁶, R⁷, R⁸ und p den Begriffsbestimmungen in einem beliebigen der Ansprüche 1 bis 9 entsprechen;
mit einer Verbindung nach der folgenden allgemeinen Formel (III) umfasst: 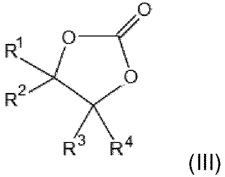
in welcher R¹, R², R³ und R⁴ den Begriffsbestimmungen in einem beliebigen der Ansprüche 1 bis 11 entsprechen, ein Rest von den Resten R¹, R², R³ oder R⁴ für eine Gruppe -C(O)-X-R⁹ steht, wobei X und R⁹ den Begriffsbestimmungen in einem beliebigen der Ansprüche 1 bis 9 entsprechen.

11. Zusammensetzung C, die zwei unterschiedliche Verbindungen der Formel (I) umfasst, welche den Begriffsbestimmungen in einem beliebigen der Ansprüche 1 bis 9 entsprechen.

12. Zusammensetzung C nach Anspruch 11, umfassend:
- eine Verbindung der Formel (1-3): 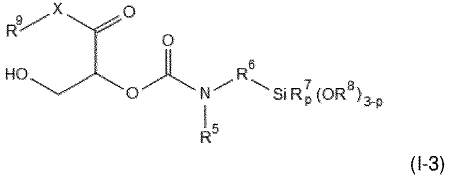 und
- eine Verbindung der Formel (1-4): 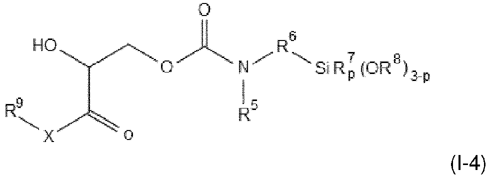 in welchen R⁵, R⁶, R⁷, R⁸, R⁹, X und p den Begriffsbestimmungen in einem beliebigen der Ansprüche 1 bis 9 entsprechen.

13. Polyurethan P, das mittels eines Verfahrens erhalten wurde, welches einen Schritt umfasst, in dem Folgendes miteinander umgesetzt wird:
- mindestens eine, vorzugsweise mindestens zwei, Verbindung(en) C, der Formel (I) gemäß den Begriffsbestimmungen in einem beliebigen der Ansprüche 1 bis 9, und
- ein Präpolymer, vorzugsweise Polyurethan-Präpolymer, der folgenden Formel (IV): 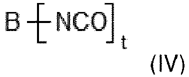 in welcher t für eine ganze oder eine rationale Zahl im Bereich von 2 bis 4 steht und B für einen mehrwertigen organischen Rest steht.

14. Polyurethan P', das die folgende Formel (V) hat: 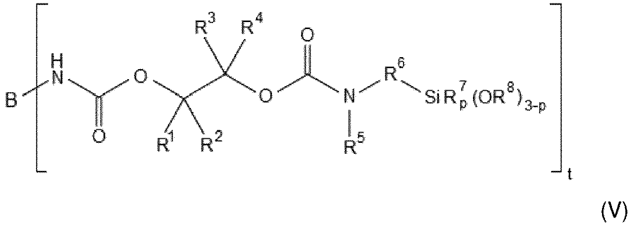 in welcher:
- B et t den Begriffsbestimmungen in Anspruch 13 entsprechen
- R¹, R², R³, R⁴, R⁹, R⁵, R⁶, R⁷, R⁸, R⁹, X und p den Begriffsbestimmungen in einem beliebigen der Ansprüche 1 bis 9 entsprechen.

15. Formulierung, die ein Polyurethan P nach Anspruch 13 oder eine Polyurethan P' nach Anspruch 14 sowie mindestens ein Additiv umfasst, das aus der Gruppe ausgewählt ist, welche aus Folgendem besteht: Katalysatoren, Füllstoffen, Antioxidantien, UV-Stabilisatoren/UV-Absorbern, Metalldeaktivatoren, Antistatika, Aufschäummitteln, Bioziden, Weichmachern, Gleitmitteln, Emulgatoren, Farbstoffen, Pigmenten, Rheologiemitteln, Schlagzähmodifikatoren, Haftvermittlern, optischen Aufhellern, Flammschutzmitteln, gegen eine Feuchtigkeitsabgabe wirkenden Mitteln, Nukleierungsmitteln, Lösungsmitteln, reaktionsfähigen Verdünnungsmitteln und deren Mischungen.

16. Verwendung der Formulierung nach Anspruch 15, oder eines Polyurethans P nach Anspruch 13, oder eines Polyurethans P' nach Anspruch 14, zur Herstellung von Klebstoffen, Beschichtungen oder von Kitt.

## Claims

1. Compound of formula (I): 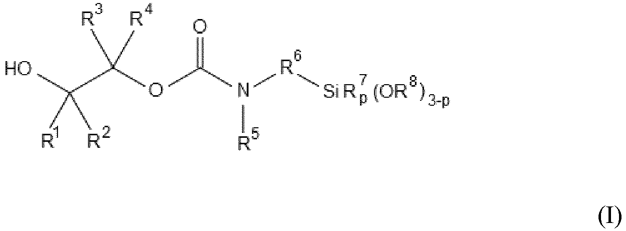 in which:
- R¹, R², R³ and R⁴ are each, independently of each other, chosen from the group consisting of: H; a linear or branched alkyl group comprising from 1 to 20 carbon atoms; and a group -C(O)-X-R⁹ in which:
o X represents an oxygen atom or a radical NR¹⁰;
o R⁹ is chosen from the group consisting of: a linear or branched, aliphatic or cyclic alkyl group comprising from 1 to 60 carbon atoms, preferably from 1 to 20 carbon atoms, preferentially from 1 to 12 carbon atoms, said alkyl group possibly being interrupted with one or more heteroatoms chosen from O and S, said alkyl group possibly comprising one or more unsaturations; an aryl group comprising from 6 to 24 carbon atoms, preferably from 6 to 12 carbon atoms; and an arylalkyl group in which the alkyl group comprises from 1 to 12 carbon atoms;
o R¹⁰ is chosen from the group consisting of: a hydrogen atom, a linear or branched, aliphatic or cyclic alkyl group comprising from 1 to 60 carbon atoms, preferably from 1 to 20 carbon atoms, preferentially from 1 to 12 carbon atoms, said alkyl group possibly being interrupted with one or more heteroatoms chosen from O and S, said alkyl group possibly comprising one or more unsaturations; an aryl group comprising from 6 to 24 carbon atoms, preferably from 6 to 12 carbon atoms; and an arylalkyl group in which the alkyl group comprises from 1 to 12 carbon atoms;
- R⁵ represents a hydrogen atom, a linear or branched, cyclic or aliphatic alkyl radical comprising from 1 to 20 carbon atoms, preferably from 1 to 12 carbon atoms, or a radical -R⁶-SiR⁷ₚ(OR⁸)₃₋ₚ;
- R⁶ represents a linear or branched, cyclic or aliphatic alkylene radical comprising from 1 to 12 carbon atoms, preferably from 1 to 5 carbon atoms;
- R⁷ represents a linear or branched, cyclic or aliphatic alkyl radical comprising from 1 to 12 carbon atoms, preferably from 1 to 5 carbon atoms;
- each R⁸ represents, independently of each other, a linear or branched, cyclic or aliphatic alkyl radical comprising from 1 to 12 carbon atoms, preferably from 1 to 5 carbon atoms; or two radicals R⁸ may together form a ring comprising from 3 to 12 carbon atoms; and
- p represents 0, 1 or 2;
on condition that a radical from among the radicals R¹, R², R³ or R⁴ represents a group -C(O)-X-R⁹.

2. Compound according to Claim 1, having the formula (I-1) below: 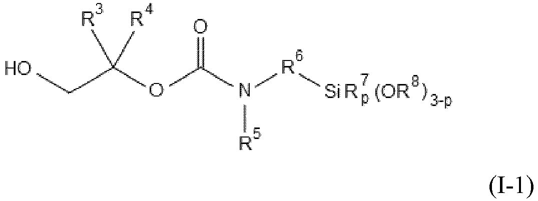 in which R³, R⁴, R⁵, R⁶, R⁷, R⁸ and p are as defined in Claim 1, a radical from among R³ and R⁴ representing a group -C(O)-X-R⁹, X and R⁹ being as defined in Claim 1.

3. Compound according to Claim 2, **characterized in that** it is chosen from:
- the compounds of formula (I-1-A) in which R³, R⁴, R⁵, R⁶, R⁷, R⁸ and p are as defined in Claim 1, and a radical from among R³ and R⁴ represents a group - C(O)-O-R⁹, R⁹ being as defined in Claim 1;
and
- the compounds of formula (I-1-B) in which R³, R⁴, R⁵, R⁶, R⁷, R⁸ and p are as defined in Claim 1, and a radical from among R³ and R⁴ represents a group - C(O)-N(R¹⁰)-R⁹, R⁹ and R¹⁰ being as defined in Claim 1.

4. Compound according to Claim 1, having the formula (I-2) below: 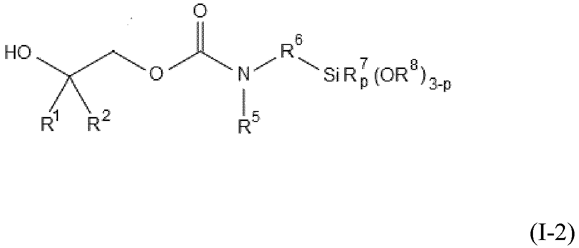 in which R¹, R², R⁵, R⁶, R⁷, R⁸ and p are as defined in Claim 1, a radical from among R¹ and R² representing a group -C(O)-X-R⁹, X and R⁹ being as defined in Claim 1.

5. Compound according to Claim 4, **characterized in that** it is chosen from:
- the compounds of formula (I-2-A) in which R¹, R², R⁵, R⁶, R⁷, R⁸ and p are as defined in Claim 1, and a radical from among R¹ and R² represents a group - C(O)-O-R⁹, R⁹ being as defined in Claim 1;
or
- the compounds of formula (I-2-B) in which R¹, R², R⁵, R⁶, R⁷, R⁸ and p are as defined in Claim 1, and a radical from among R¹ and R² represents a group - C(O)-N(R¹⁰)-R⁹, R⁹ and R¹⁰ being as defined in Claim 1.

6. Compound according to Claim 2, having the formula (I-3) below: 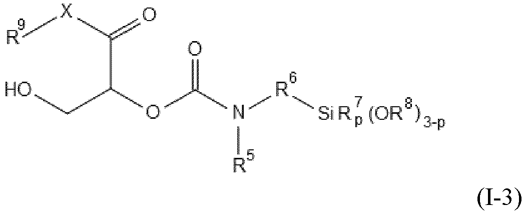 in which R⁵, R⁶, R⁷, R⁸, X, R⁹ and p are as defined in Claim 1.

7. Compound according to Claim 4, having the formula (I-4) below: 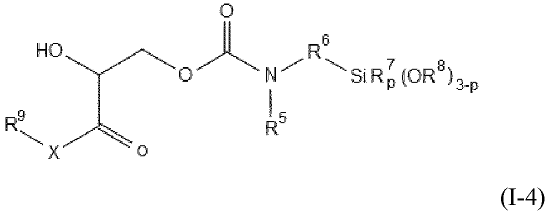 in which R⁵, R⁶, R⁷, R⁸, X, R⁹ and p are as defined in Claim 1.

8. Compound according to any one of Claims 1 to 7, **characterized in that**:
- p = 0; and/or
- R⁸ = methyl; and/or
- R⁶ = propylene; and/or
- R5 = H or butyl.

9. Compound according to any one of Claims 1 to 8, chosen from the following compounds:

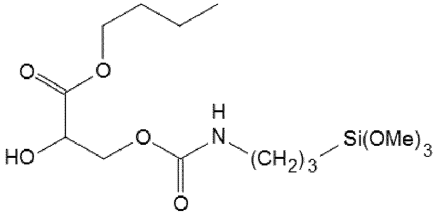

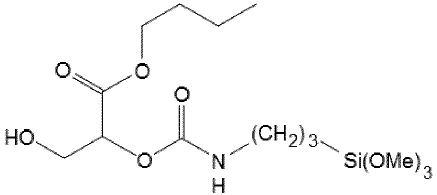

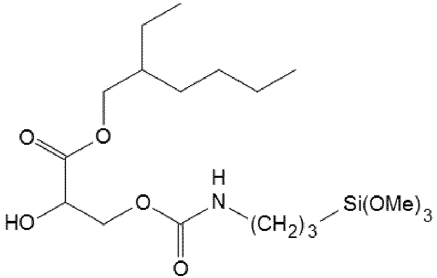

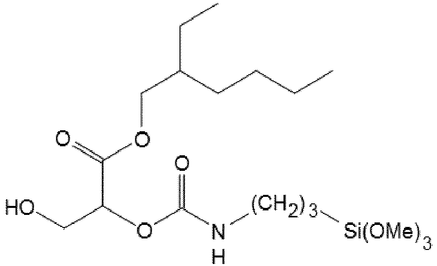

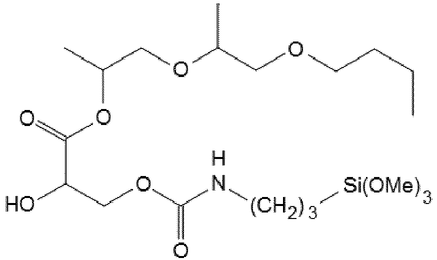

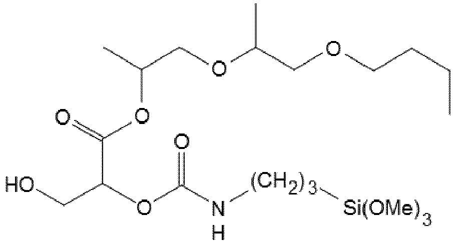

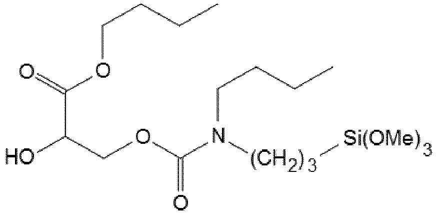

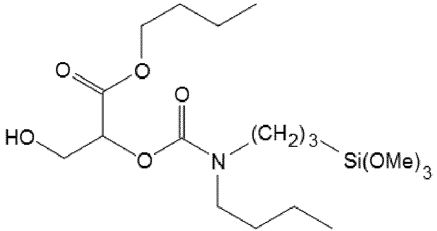

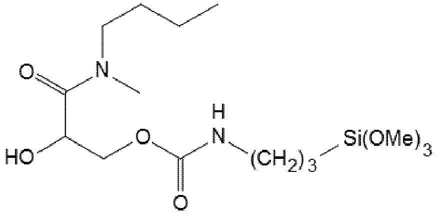

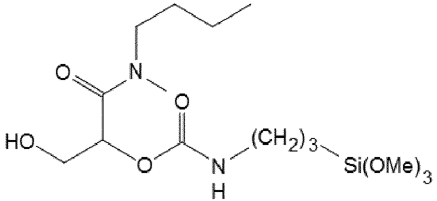

10. Process for preparing a compound of formula (I) as defined in any one of Claims 1 to 9, comprising the reaction between a compound of formula (II): 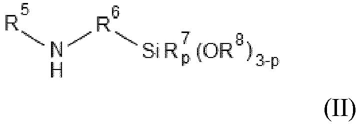 in which R⁵, R⁶, R⁷, R⁸ and p are as defined in any one of Claims 1 to 9;
with a compound of formula (III) below: 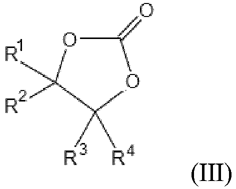 in which R¹, R², R³ and R⁴ are as defined in any one of Claims 1 to 11, a radical from among the radicals R¹, R², R³ and R⁴ representing a group -C(O)-X-R⁹ with X and R⁹ being as defined in any one of Claims 1 to 9.

11. Composition C comprising two different compounds of formula (I) as defined in any one of Claims 1 to 9.

12. Composition C according to Claim 11, comprising:
- a compound of formula (I-3): 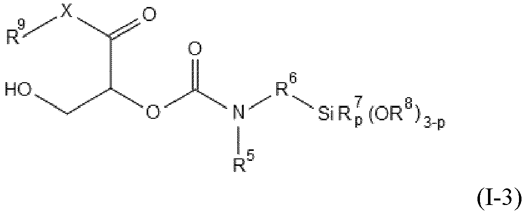 and
- a compound of formula (I-4): 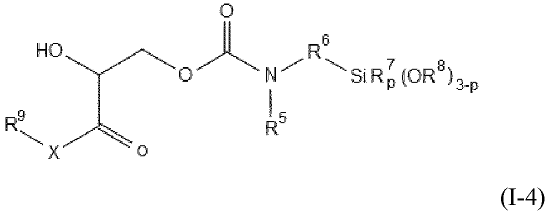 in which R⁵, R⁶, R⁷, R⁸, R⁹, X and p are as defined in any one of Claims 1 to 9.

13. Polyurethane P obtained via a process comprising a step of reaction between:
- at least one, preferably at least two, compound(s) of formula (I) as defined in any one of Claims 1 to 9, and
- a prepolymer, preferably a polyurethane prepolymer, of formula (IV) below: 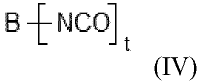 in which t represents an integer or non-integer number ranging from 2 to 4, and B represents a multivalent organic radical.

14. Polyurethane P' having the formula (V) below: 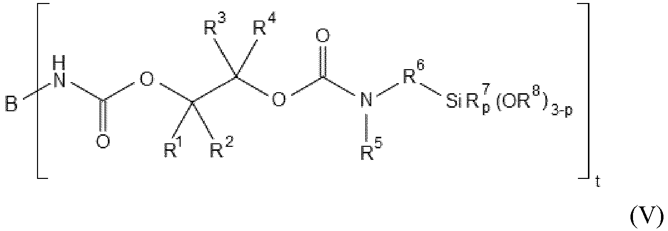 in which:
- B and t are as defined in Claim 13;
- R¹, R², R³, R⁴, R⁹, R⁵, R⁶, R⁷, R⁸, R⁹, X and p are as defined in any one of Claims 1 to 9.

15. Formulation comprising at least one polyurethane P as defined in Claim 13, or a polyurethane P' according to Claim 14, and at least one additive chosen from the group consisting of catalysts, fillers, antioxidants, light stabilizers/UV absorbers, metal deactivators, antistatics, foaming agents, biocides, plasticizers, lubricants, emulsifiers, dyes, pigments, rheological agents, impact modifiers, adhesion promoters, optical brighteners, flame retardants, anti-sweating agents, nucleating agents, solvents, reactive diluents and mixtures thereof.

16. Use of the formulation according to Claim 15, or of a polyurethane P according to Claim 13, or of a polyurethane P' according to Claim 14, for the preparation of adhesives, coatings or mastics.
